# EUROPÄISCHE PATENTSCHRIFT

(11) **EP 3 594 036 B1**
(45) Veröffentlichungstag und Bekanntmachung des Hinweises auf die Patenterteilung: **21.08.2024**
(21) Anmeldenummer: 18183532.3
(22) Anmeldetag: 13.07.2018
(51) Int. Cl.: B60J 7/06

(54) **EINTEILIGER SPRIEGEL FÜR EINEN NUTZFAHRZEUG- ODER ANHÄNGERAUFBAU**
ONE-PIECE ROOF BOW FOR A COMMERCIAL VEHICLE OR TRAILER SUPERSTRUCTURE
TRAVERSE EN UNE SEULE PIÈCE POUR UNE STRUCTURE DE VÉHICULE UTILITAIRE OU DE REMORQUE

(43) Veröffentlichungstag der Anmeldung: 15.01.2020
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 3 069 929
- EP-B1- 3 069 929
- DE-A1- 102012 006 387
- DE-B4- 102012 006 387
- US-A- 5 000 507

## Beschreibung

### Technisches Gebiet

Die vorliegende Erfindung betrifft einen einteiligen Spriegel für einen Nutzfahrzeug- oder Anhängeraufbau. Außerdem betrifft die vorliegende Erfindung einen Fahrzeuganhänger und ein Verfahren zu Herstellung eines einteiligen Spriegels.

### Hintergrund

Zahlreiche Nutzfahrzeug- oder Anhängeraufbauten weisen eine Spriegelkonstruktion zur Anbringung einer Plane auf. Mit der Plane kann auf der Ladefläche des Nutzfahrzeug- oder Anhängeraufbaus transportiertes Ladegut abgedeckt und beispielsweise vor Regen geschützt werden.

Bei einer üblichen Spriegelkonstruktion wird die Plane beispielsweise im Dachbereich des Nutzfahrzeug- oder Anhängeraufbaus durch mehrere in bestimmten Abständen vorgesehene Dachquerspriegel von unten abgestützt, die dafür sorgen, dass die Plane selbst bei Ansammlung von Wasser oder Eis auf dem Dach nicht zu sehr durchhängt. Des Weiteren tragen die Dachquerspriegel zu Stabilität der Spriegelkonstruktion und eines entsprechenden Planenaufbaus bau.

Die EP 3 170 721 A1 offenbart beispielsweise eine Spriegelkonstruktion mit Dachquerspriegeln, die zwischen zwei in Längsrichtung eines Nutzfahrzeugaufbaus verlaufenden Spriegelträgern parallel zueinander angeordneten sind. Die Dachquerspriegel sind entlang der Spriegelträger verschiebbar.

Eine Verschiebbarkeit von Dachquerspriegeln wird üblicherweise durch das Vorsehen von Rollenwagen erreicht, die direkt oder indirekt an den Dachquerspriegeln angebracht sind.

Die DE 10 2013 201 000 A1 offenbart beispielsweise eine Spriegelkonstruktion mit einer Schiebeverdeckstruktur, bei der die Spriegel über Faltplattenelemente mit Rollenwagen verbunden sind. Die Rollenwagen sind in als Schienen ausgebildeten Längsgurten der Schiebeverdeckstruktur verschiebbar.

Alternativ können Rollenwagen auch direkt an den Dachquerspriegeln montiert werden. Die Montage von Rollenwagen an einem Dachquerspriegel erfolgt beispielsweise durch Pressung oder Verschweißen und erfordert somit einen gewissen Arbeitsaufwand.

Die DE 298 21 546 U1 offenbart einen Spriegel, bei dem ein Spriegelschaft zusammen mit den ihn an Führungsbahnen von Längsgurten des Fahrzeugaufbaus führenden und abstützenden Rollenwagen einteilig ausgebildet ist. Durch die einteilige Ausbildung des Spriegelschafts zusammen mit den Rollenwagen wird der für die Montage von vorgefertigten Rollenwagen an den Spriegeln erforderliche Aufwand vermieden.

Der in der DE 298 21 546 U1 offenbarte Spriegel besteht aus einem als Hohlprofil ausgebildeten Schaftteil mit einem quadratischen oder rechteckigen Profilquerschnitt und zwei Rollenwagen an den Endbereichen des Spriegels, die durch Verquetschung des Hohlprofils zu einem doppellagigen Flachmaterial und Abwinklung der Endbereiche senkrecht zur Profilachse des Hohlprofils ausgebildet sind.

Das Hohlprofil des Schaftteils mit dem quadratischen oder rechteckigen Profilquerschnitt ist ein geschlossenes Profil. Es ist schwierig, den Raum innerhalb des Hohlprofils zur Anbringung oder Aufbewahrung von Ladungssicherungselementen, wie beispielsweise Sicherungsstangen oder eines Gurtliftsystems, zu nutzen.

Die US 5,000,507 A und die DE 10 2012 006 387 A1 offenbaren einen Spriegel bzw. eine Strebe mit rechteckigem Profilquerschnitt.

Ein der Erfindung zu Grunde liegendes Problem besteht darin, einen Spriegel vorzusehen, der einfach und kostengünstig herzustellen ist, eine hohe Belastbarkeit aufweist und Anbringungs- und/oder Aufbewahrungsmöglichkeiten für Ladungssicherungselemente bietet.

### Darstellung der Erfindung

Gemäß einem Aspekt der vorliegenden Offenbarung ist ein einteiliger Spriegel durch Umformen aus einem Blechteil ausgebildet. Der Spriegel umfasst einen länglichen Mittelabschnitt mit einer in der Längserstreckungsrichtung des Mittelabschnitts verlaufenden ersten Sicke, der senkrecht zur Längserstreckungsrichtung ein im Wesentlichen Omega-förmiges erstes Querschnittsprofil aufweist, und zwei Anbringungsabschnitte zur Anbringung an einem Nutzfahrzeug- oder Anhängeraufbau, die einstückig mit dem Mittelabschnitt an den beiden Enden des Mittelabschnitts ausgebildet sind. Jeder der beiden Anbringungsabschnitte umfasst einen dem Mittelabschnitt zugewandten ersten Bereich, der senkrecht zur Längserstreckungsrichtung des Mittelabschnitts ein im Vergleich zu dem ersten Querschnittsprofil flacheres zweites Querschnittsprofil aufweist, und einen von dem Mittelabschnitt abgewandten zweiten Bereich, der im Wesentlichen senkrecht zur Längserstreckungsrichtung des Mittelabschnitts in der zu der ersten Sicke entgegengesetzten Richtung abgewinkelt ist. Der Begriff "Spriegel" umfasst dabei einen Dachquerspriegel, aber auch einen Spriegel oder eine Unterstützungsstange bzw. Verstrebung, der bzw. die in der Seitenwand oder der Heckwand oder zwischen der Dachkonstruktion und dem Ladeboden eines Nutzfahrzeug- oder Anhängeraufbaus verwendet wird.

Der Spriegel ist einfach und kostengünstig herzustellen. Das im Wesentlichen Omega-förmige Querschnittsprofil des Mittelabschnitts, das flachere Querschnittsprofil des ersten Bereichs und der abgewinkelte zweite Bereich der Anbringungsabschnitte lassen sich beispielsweise durch Umformen aus einem Blechteil mittels eines Pressverfahrens bzw. durch Tiefziehen einfach und kostengünstig ausbilden. Eine Montage separater Laufwagen, beispielsweise durch Verschweißen, ist nicht erforderlich. Die für die Herstellung des Spriegels erforderliche Zeit wird somit verkürzt, der Materialaufwand wird verringert, und die Fertigungsverfahren werden vereinfacht und optimiert, wodurch die Herstellungskosten gesenkt werden.

Das im Wesentlichen Omega-förmige Querschnittsprofil des Mittelabschnitts bietet beispielsweise im Falle eines Dachquerspriegels eine hohe Belastbarkeit gegenüber Kräften, die in einer Richtung senkrecht zu der Längserstreckungsrichtung des Mittelabschnitts oder horizontal auf den Dachquerspriegel wirken. Der Dachquerspriegel kann somit den Kräften, die durch das Gewicht einer auf dem Dachquerspriegel aufliegenden Plane sowie möglicher Ansammlungen von Wasser oder Eis auf der Plane hervorgerufen werden, zuverlässig standhalten. Versuche haben gezeigt, dass ein Spriegel gemäß der Offenbarung Belastungen bis zu mindestens 100 kg ohne bleibende plastische Verformung tragen kann.

Das im Wesentlichen Omega-förmige Querschnittsprofil des Mittelabschnitts ermöglicht zudem die Unterbringung von Ladungssicherungselementen oder die Unterbringung von Anbringungselementen für Ladungssicherungselemente innerhalb eines Raums in dem Profil. Demnach können die Ladungssicherungselemente und die Anbringungselemente innerhalb des Mittelabschnitts geschützt und verborgen verstaut werden. Beispielsweise kann ein Seil in dem Profil des Mittelabschnitts geführt werden, statt außerhalb des Profils angebracht zu werden und in den Laderaum zu hängen.

Der erste Bereich der Anbringungsabschnitte mit dem zweiten Querschnittsprofil, das flacher als das erste Querschnittsprofil des Mittelabschnitts ist, eignet sich zur Anbringung an dem Nutzfahrzeug- oder Anhängeraufbau. Beispielsweise kann der erste Bereich zur Anbringung einer Führungsrolle für eine Laufschiene an dem Nutzfahrzeug- oder Anhängeraufbau verwendet werden.

Gemäß einer weiteren beispielhaften Ausgestaltung weist der zweite Bereich der Anbringungsabschnitte eine kontinuierlich mit der ersten Sicke verlaufende zweite Sicke auf, und das zweite Querschnittsprofil ist im Wesentlichen Omega-förmig. Ein derart ausgebildeter Spriegel weist im Bereich der Anbringungsabschnitte eine hohe Stabilität auf. Die Gefahr eines Abknickens der Anbringungsabschnitte ist selbst bei einer hohen Belastung des Spriegels gering.

Gemäß einer weiteren beispielhaften Ausgestaltung weist die zweite Sicke eine um mindestens 10 mm geringere Tiefe auf als die erste Sicke. Damit eignet sich die zweite Sicke beispielsweise zur Anbringung einer Führungsrolle.

Gemäß einer weiteren beispielhaften Ausgestaltung verläuft die zweite Sicke von dem ersten Bereich der Anbringungsabschnitte außen um eine Kante zwischen dem ersten Bereich und dem zweiten Bereich. Eine derartige Ausgestaltung weist eine besonders hohe Stabilität des abgewinkelten zweiten Bereichs der Anbringungsabschnitte auf.

Gemäß einer weiteren beispielhaften Ausgestaltung weist das zweite Querschnittsprofil in einer Richtung senkrecht zu der Längserstreckungsrichtung des Mittelabschnitts und senkrecht zu der Richtung, in der der zweite Bereich der Anbringungsabschnitte abgewinkelt ist, eine Breite von mindestens 30 mm auf. Bei einer derartigen Ausgestaltung liegt ein breiter Anbringungsbereich für eine stabile Anbringung des Spriegels an dem Nutzfahrzeug- oder Anhängeraufbau vor.

Gemäß weiterer beispielhafter Ausgestaltungen weist die erste Sicke eine Tiefe von mindestens 25 mm und eine Breite von mindestens 25 mm auf, oder beträgt die Breite des ersten Querschnittsprofils in der Mitte des Mittelabschnitts in der Längserstreckungsrichtung mindestens 70 mm. Ein derart ausgebildeter Spriegel weist eine besonders hohe Belastbarkeit auf. Die Breite des ersten Querschnittsprofils nimmt erfindungsgemäß von den Enden des Mittelabschnitts in der Längserstreckungsrichtung zu der Mitte des Mittelabschnitts um mindestens 10 mm zu.

Gemäß einer weiteren beispielhaften Ausgestaltung ist in dem ersten Bereich und in dem zweiten Bereich der Anbringungsabschnitte jeweils mindestens eine Rolle zur verschiebbaren Anbringung des Spriegels in einer Laufschiene eines Längsgurtes bzw. Dachholms des Nutzfahrzeug- oder Anhängeraufbaus angebracht. Durch die Rollen wird die Verschiebbarkeit innerhalb der Laufschiene gewährleistet.

Gemäß einer weiteren beispielhaften Ausgestaltung ist in dem Mittelabschnitt und/oder in den Anbringungsabschnitten mindestens ein Loch mit einem Durchmesser in einem Bereich von 5 mm bis 30 mm zur Befestigung von Ladungssicherungselementen ausgebildet. Mittels des Lochs lassen sich Ladungssicherungselemente einfach und zuverlässig an dem Spriegel anbringen. Das Loch kann zur formschlüssigen Anbringung der Ladungssicherungselemente beispielsweise T- oder L-förmig ausgebildet sein.

Gemäß einer weiteren beispielhaften Ausgestaltung ist in der ersten Sicke des Mittelabschnitts mindestens eine Rolle oder ein Rohrprofil, beispielsweise aus PVC, zur Führung eines Seils oder eines Gurtes angebracht. Das Seil oder der Gurt kann innerhalb der ersten Sicke geführt und platzsparend, sicher und verborgen aufbewahrt werden. Des Weiteren kann das Seil oder der Gurt durch die Sicke koordiniert geführt werden.

Gemäß einer weiteren beispielhaften Ausgestaltung ist in dem Mittelabschnitt und/oder den Anbringungsabschnitten mindestens ein Loch und/oder mindestens eine Öse und/oder mindestens ein Haken zur Anbringung einer Plane vorgesehen. An einem derartigen Spriegel lässt sich die Plane einfach und sicher anbringen.

Ein weiterer Aspekt der vorliegenden Offenbarung betrifft eine Schiebeverdeckstruktur für einen Nutzfahrzeug- oder Anhängeraufbau. Die Schiebeverdeckstruktur weist zwei Spriegel, beispielsweise zwei der oben beschriebenen einteiligen Spriegel, auf. An jedem der beiden Spriegel ist ein Verbindungselement angebracht. Die Schiebeverdeckstruktur weist ferner zwei Bügelelemente, die jeweils aus einem Draht ausgebildet sind und jeweils an einem Ende drehbar mit einem der beiden Verbindungselemente verbunden sind, und ein Auflageelement, das mit den beiden anderen Enden der beiden Bügelelemente drehbar verbunden ist und eine ebene Fläche zur Auflage einer Plane aufweist, auf.

Die Schiebeverdeckstruktur mit den aus Draht ausgebildeten Bügelelementen ist kostengünstig und einfach herzustellen. Im Gegensatz zu Schiebeverdeckstrukturen mit Kunststofffaltplatten ist kein spezielles Spritzgusswerkzeug erforderlich. Das Problem einer Versprödung von Kunststoffbauteilen durch Entweichen von Weichmachern während eines Alterungsprozesses wird vermieden. Bei Schiebeverdeckstrukturen mit Kunststofffaltplatten tritt zudem das Problem auf, dass im geöffneten Zustand der Schiebeverdeckstruktur durch die Kunststofffaltplatten ein Gegendruck zum Auseinanderschieben der Spriegel und damit zum Schließen der Schiebeverdeckstruktur erzeugt wird. Dagegen verweilen die aus Draht ausgebildeten Bügelelemente unvermindert in jeglichem Öffnungszustand. D.h., im Gegensatz zu Kunststofffaltplatten ergibt sich aus der Konstruktion der Bügelelemente im geöffneten Zustand der Schiebeverdeckstruktur keine in den geschlossenen Zustand zurückführende Kraft. Des Weiteren lässt sich eine Schiebeverdeckstruktur mit aus Draht ausgebildeten Bügelelementen im geöffneten Zustand weiter zusammenschieben als eine Schiebeverdeckstruktur mit Kunststofffaltplatten. Die Bügelelemente nehmen weniger Platz ein als Kunststofffaltplatten.

Ein weiterer Aspekt der vorliegenden Offenbarung betrifft einen Fahrzeuganhänger, der einen Anhängeraufbau mit mindestens einem der oben beschriebenen Spriegel oder die oben beschriebene Schiebeverdeckstruktur aufweist. Die Schiebeverdeckstruktur kann im Dachbereich, aber auch für Seitenplanen oder Heckplanen eingesetzt werden.

Ein weiterer Aspekt der vorliegenden Offenbarung betrifft ein Verfahren zur Herstellung eines einteiligen Spriegels aus einem länglichen Blechteil, umfassend Abwinkeln der in der Längserstreckungsrichtung des Blechteils außen liegenden Enden des Blechteils in einer Richtung im Wesentlichen senkrecht zur Längserstreckungsrichtung, und Umformen eines mittleren Abschnitts zwischen den Enden des Blechteils zum Ausbilden einer in der Längserstreckungsrichtung verlaufenden ersten Sicke, so dass der mittlere Abschnitt senkrecht zur Längserstreckungsrichtung des Blechteils ein im Wesentlichen Omega-förmiges erstes Querschnittsprofil aufweist.

Mit einem derartigen Verfahren lässt sich ein einteiliger Spriegel einfach und kostengünstig herstellen.

### Kurze Beschreibung der Zeichnungen

Weitere Merkmale und Aspekte dieser Offenbarung werden durch die folgende Beschreibung und die beiliegenden Zeichnungen offensichtlich, von denen:
Fig. 1 eine perspektivische Ansicht eines Sattelanhängers von links vorne zeigt,
Fig. 2 einen Dachquerspriegel gemäß der vorliegenden Offenbarung von hinten zeigt,
Fig. 3 eine perspektivische Ansicht eines Teils des Dachquerspriegels zeigt,
Fig. 4A ein erstes Querschnittsprofil eines Mittelabschnitts des Dachquerspriegels zeigt, und Fig. 4B ein zweites Querschnittsprofil eines ersten Bereichs eines Anbringungsabschnitts des Dachquerspriegels zeigt,
Fig. 5 einen Teil des Dachquerspriegels von hinten zeigt,
Fig. 6 einen Teil des Dachquerspriegels von oben zeigt,
Fig. 7 einen Teil des Dachquerspriegels von unten zeigt,
Fig. 8A eine perspektivische Ansicht des an einer Stelle in der Längserstreckungsrichtung geschnittenen Mittelabschnitts zeigt, und Fig. 8B eine perspektivische Ansicht eines linken und eines rechten Teils des Mittelabschnitts ohne die Anbringungsabschnitte von links unten zeigt,
Fig. 9 einen Querschnitt durch eine Stirnwand einer Sicke in dem Dachquerspriegel und eine Plane zeigt,
Fig. 10 eine perspektivische Ansicht einer Schiebeverdeckstruktur zeigt,
Fig. 11A eine perspektivische Ansicht eines Verbindungselements zeigt, Fig. 11B ein Querschnittsprofil des Verbindungselements zeigt, Fig. 11C eine perspektivische Ansicht eines Auflageelements zeigt, und Fig. 11D eine Draufsicht eines Bügelelements zeigt,
Fig. 12 eine Draufsicht einer Ausgestaltung eines Dachquerspriegels von oben zeigt, und
Fig. 13 eine perspektivische Ansicht eines Nutzfahrzeugaufbaus von rechts hinten mit einer geöffneten Seitenplane zeigt.

### Ausführliche Beschreibung von Ausführungsbeispielen

In der Beschreibung dieser Erfindung beziehen sich Richtungsangaben auf einen Fahrzeuganhänger bei Vorwärtsfahrt. Eine Vorne-Hinten-Richtung verläuft entlang einer Vorwärtsfahrtrichtung V des Fahrzeuganhängers. In seitlicher Richtung bedeutet diejenige Richtung, die horizontal entlang der Senkrechten zu der Vorwärtsfahrtrichtung V des Fahrzeuganhängers verläuft und der Links-Rechts-Richtung entspricht. Außen bedeutet am linken oder rechten seitlichen Rand des Fahrzeuganhängers. Innen bedeutet zwischen dem linken und rechten seitlichen Rand des Fahrzeuganhängers.

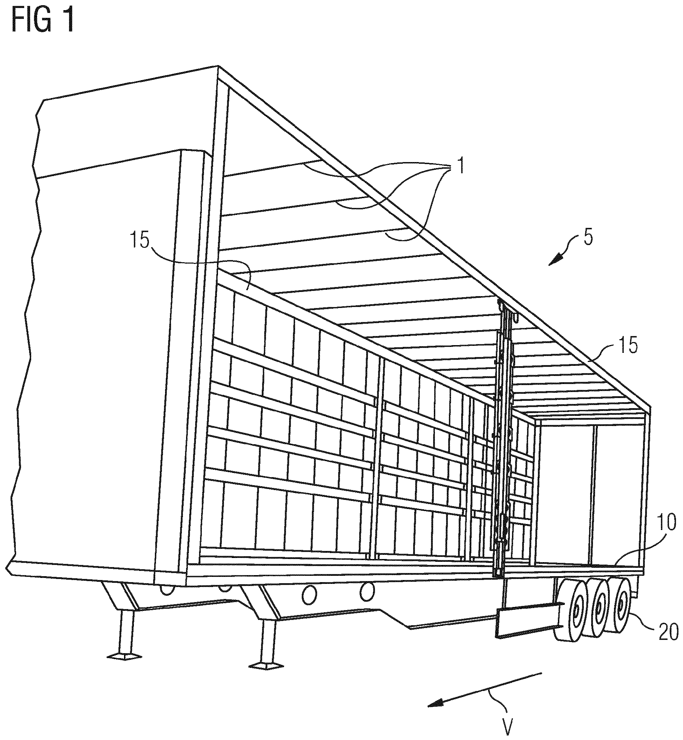

Im Folgenden wird eine Ausführungsform der vorliegenden Offenbarung mit Bezug auf die Figuren 1 bis 9 beschrieben.

Fig. 1 zeigt einen Sattelanhänger 5 als ein Beispiel eines Fahrzeuganhängers in einer perspektivischen Ansicht von links vorne. Der Sattelanhänger 5 weist ein Fahrgestell mit Rädern 20 und einen Planenaufbau mit einem Ladeboden 10 auf. Ein Dach des Planenaufbaus wird randseitig durch zwei Längsgurte 15 begrenzt, die in der Vorne-Hinten-Richtung verlaufen. Zwischen den Längsgurten 15 sind mehrere (beispielsweise 20) Dachquerspriegel (Spriegel) 1 angeordnet, die eine Plane auf dem Dach des Planenaufbaus von unten abstützen. Die Dachquerspriegel 1 verlaufen im Wesentlichen parallel zueinander in der Links-Rechts-Richtung. Die Plane liegt im Dachbereich auf den Dachquerspriegeln 1 auf.

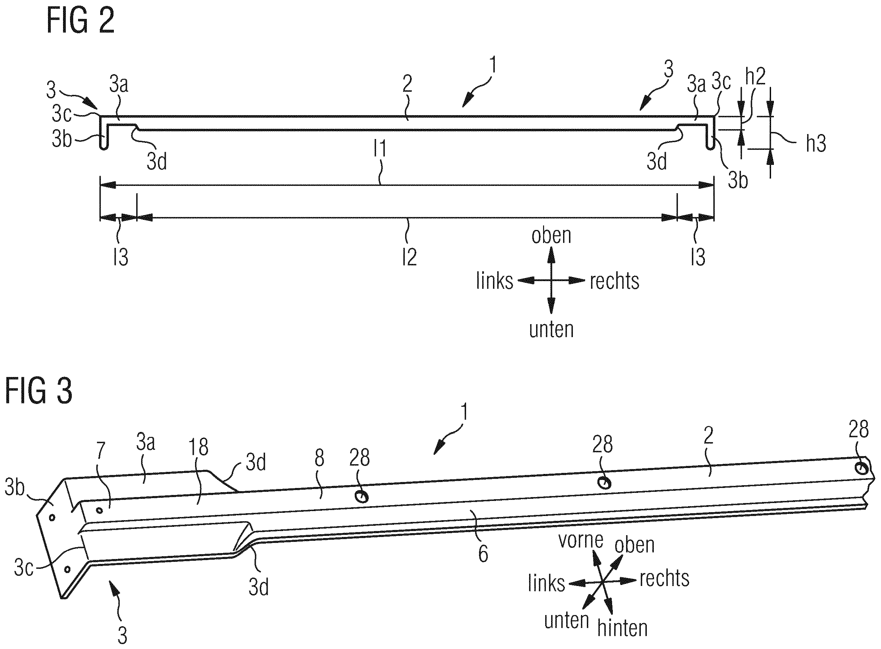

Fig. 2 zeigt einen Dachquerspriegel 1 gemäß der vorliegenden Offenbarung von hinten in Fahrrichtung. Der Dachquerspriegel 1 weist eine Länge 11 in der Links-Rechts-Richtung von ca. 2,53 m auf. Die Länge 11 kann einen anderen Wert von mindestens 0,5 m oder mindestens 2 m oder mindestens 2,3 m oder mindestens 2,5 m oder mindestens 4 m haben. Die Länge 11 kann auf 2,6 m oder 2,55 m begrenzt sein.

Der Dachquerspriegel 1 weist einen länglichen Mittelabschnitt 2, der sich in der Links-Rechts-Richtung erstreckt und einen Schaft des Dachquerspriegels 1 bildet, und zwei Anbringungsabschnitte 3 an den beiden Enden des Mittelabschnitts 2 in der Links-Rechts-Richtung auf.

Der Mittelabschnitt 2 erstreckt sich geradlinig zwischen den beiden Anbringungsabschnitten 3. Jeder der beiden Anbringungsabschnitte 3 weist einen ersten Bereich 3a auf der dem Mittelabschnitt 2 zugewandten Seite und einen zweiten Bereich 3b auf der von dem Mittelabschnitt 2 abgewandten Seite auf. Der erste Bereich 3a erstreckt sich im Wesentlichen entlang der Längserstreckungsrichtung des Mittelabschnitts 2 in der Links-Rechts-Richtung. Zwischen der Längserstreckungsrichtung des Mittelabschnitts 2 und der Längserstreckungsrichtung des ersten Bereichs 3a kann ein kleiner Winkel ausgebildet sein. Der zweite Bereich 3b ist an einer Kante 3c senkrecht zu der Längserstreckungsrichtung des Mittelabschnitts 2 nach unten abgewinkelt und erstreckt sich im Wesentlichen senkrecht zu der Längserstreckungsrichtung des Mittelabschnitts 2 bzw. des ersten Abschnitts 3a in der Oben-Unten-Richtung und in der Vorne-Hinten-Richtung. Die Kante 3c erstreckt sich im Wesentlichen senkrecht zu der Längserstreckungsrichtung des Mittelabschnitts 2 bzw. der Längserstreckungsrichtung des ersten Bereichs 3a in der Vorne-Hinten-Richtung. Die Kante 3c kann gerundet sein. Der Dachquerspriegel 1 ist im Wesentlichen spiegelsymmetrisch zu einer Ebene senkrecht zu der Längserstreckungsrichtung des Mittelabschnitts 2, die durch die Mitte des Mittelabschnitts 2 in der Längserstreckungsrichtung verläuft.

Eine Länge l3 jedes der beiden Anbringungsabschnitte 3, die im Wesentlichen der Länge des ersten Bereichs 3a entspricht, beträgt mindestens 1 cm oder mindestens 5 cm oder mindestens 10 cm oder mindestens 15 cm und beträgt höchstens 30 cm oder höchstens 20 cm. Eine Länge l2 des Mittelabschnitts 2 entspricht im Wesentlichen der Länge 11 des Dachquerspriegels 1 abzüglich der Längen l3 der beiden Anbringungsabschnitte 3. Die Länge l2 des Mittelabschnitts 2 beträgt beispielsweise mindestens 180 cm oder mindestens 220 cm.

Eine Höhe h2 des Mittelabschnitts 2 in der Oben-Unten-Richtung beträgt mindestens 15 mm oder mindestens 20 mm oder mindestens 25 mm oder mindestens 30 mm und beträgt höchstens 100 mm oder höchstens 70 mm oder höchstens 50 mm oder höchstens 40 mm oder höchstens 35 mm oder höchsten 30

mm. Eine Höhe h3 der beiden Anbringungsabschnitte 3, die im Wesentlichen der Höhe des gesamten Dachquerspriegels 1 entspricht und die im Wesentlichen der Höhe des zweiten Bereichs 3b der Anbringungsabschnitte 3 entspricht, beträgt mindestens 5 mm oder mindestens 25 mm oder mindestens 30 mm oder mindestens 50 mm und beträgt höchstens 150 mm oder höchstens 100 mm oder höchstens 70 mm oder höchstens 50 mm.

Der Mittelabschnitt 2 und die beiden Anbringungsabschnitte 3 sind einstückig aus einem Blechteil, beispielsweise einem Blechstreifen, durch Umformen mittels eines Pressverfahrens bzw. durch Tiefziehen ausgebildet. Somit ist der Dachquerspriegel 1 mit dem Mittelabschnitt 2 und den beiden Anbringungsabschnitten 3 einteilig ausgebildet. Die einteilige Ausbildung schließt dabei nicht aus, dass an dem Dachquerspriegel 1 weitere Teile angebracht werden. Beispielsweise können in den Anbringungsabschnitten 3 Führungsrollen und/oder Laufrollen zur verschiebbaren Anbringung des Dachquerspriegels 1 in einer Laufschiene eines Längsgurtes 15 angebracht werden.

Das Blechteil, aus dem der Mittelabschnitt 2 und die Anbringungsabschnitte 3 ausgebildet sind, weist eine Dicke in einem Bereich von 0,5 mm bis 10 mm auf. Alternativ kann das Blechteil eine Dicke in einem Bereich von 1,5 mm bis 3 mm oder bis 2,5 mm oder in einem Bereich von 1,8 mm bis 2,3 mm aufweisen. Das Blechteil kann aus einem geeigneten Metall, wie Eisen oder Stahl, beispielsweise aus S235JR, S355JO, QStE-Stahl, QStE340TM, QStE380TM, QStE690TM, ausgebildet sein.

Fig. 3 zeigt eine perspektivische Ansicht eines linken Teils des Dachquerspriegels 1 mit einem Anbringungsabschnitt 3 und einem Teil des Mittelabschnitts 2 von einer oberen, rückwärtigen und links außen liegenden Position betrachtet. Der einstückige mit dem linken Teil ausgebildete rechte Teil des Dachquerspriegels 1 mit dem zweiten Anbringungsabschnitt 3 ist in der Darstellung in Fig. 3 weggelassen. Der Mittelabschnitt 2 weist eine in der Längserstreckungsrichtung des Mittelabschnitts 2 verlaufende erste Sicke 6 auf. Der erste Bereich 3a des Anbringungsabschnitts 3 weist eine in der Längserstreckungsrichtung des Mittelabschnitts 2 verlaufende zweite Sicke 7 auf. Die zweite Sicke 7 des ersten Bereichs 3a verläuft kontinuierlich mit der ersten Sicke 6 des Mittelabschnitts 2. Die zweite Sicke 7 des ersten Bereichs 3a endet an der Kante 3c zwischen dem ersten Bereich 3a und dem zweiten Bereich 3b. Alternativ kann die zweite Sicke 7 um die Kante 3c herum verlaufen bzw. in die Kante 3c oder den zweiten Bereich 3b hineinlaufen.

Der zweite Bereich 3b ist senkrecht zu Längserstreckungsrichtung des Mittelabschnitts 2 in der Richtung entgegengesetzt zu der Sicke 7 abgewinkelt. Der zweite Bereich 3b ist aus einem flachen Abschnitt des Blechteils ausgebildet. Der zweite Bereich 3b weist senkrecht zu der Oben-Unten-Richtung ein im Wesentlichen flaches bzw. ebenes Querschnittsprofil auf. In dem Fall, dass die zweite Sicke 7 um die Kante 3c zwischen dem ersten Bereich 3a und dem zweiten Bereich 3b herum verläuft, kann sich die zweite Sicke 7 in bzw. durch den zweiten Bereich 3b erstrecken.

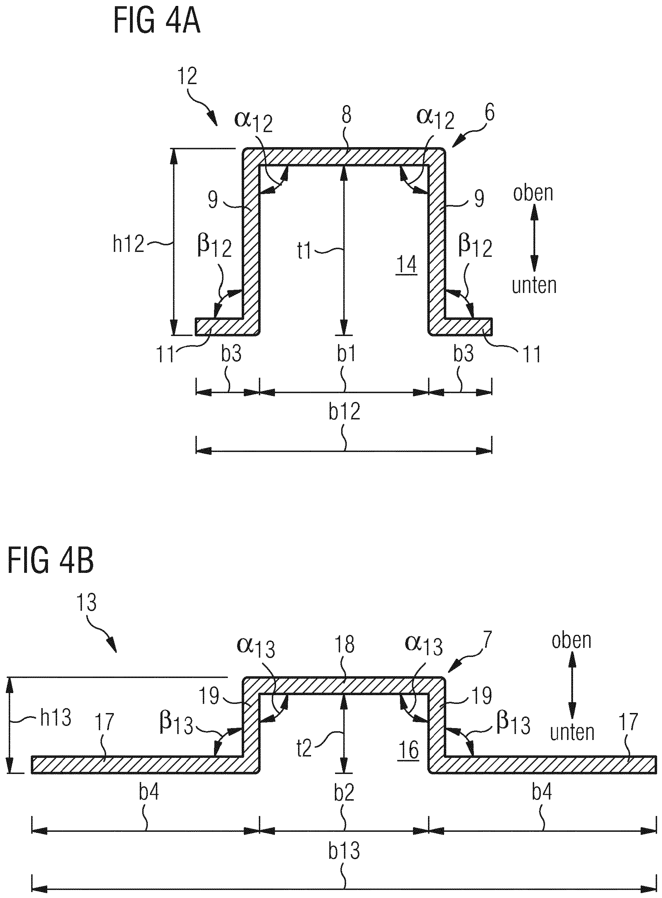

Fig. 4A zeigt ein erstes Querschnittsprofil 12 des Mittelabschnitts 2 senkrecht zu der Längserstreckungsrichtung des Mittelabschnitts 2. Das erste Querschnittsprofil 12 ist im Wesentlichen Omega-förmig. Die erste Sicke 6 des Mittelabschnitts 2 wird durch eine Stirnwand 8 und zwei seitlich an die Stirnwand 8 anschließende Seitenwände 9 gebildet. In einem montierten Zustand des Dachquerspriegels 1 kann eine Plane des Planenaufbaus von oben auf der Stirnwand 8 der ersten Sicke 6 des Mittelabschnitts 2 aufliegen und davon abgestützt und fixiert werden.

Die Seitenwände 9 erstrecken sich im Wesentlichen senkrecht zu der Stirnwand 8, d.h., die in Fig. 4A gezeigten Winkel α₁₂ zwischen der Stirnwand 8 und der jeweiligen Seitenwand 9 sind annähernd 90°. An den der Stirnwand 8 gegenüberliegenden Enden der Seitenwände 9 ist jeweils ein Flügel 11 ausgebildet, der im Wesentlichen senkrecht zu der Seitenwand 9 weg von einem in der ersten Sicke 6 gebildeten Raum 14 nach außen vorsteht, d.h., die in Fig. 4A gezeigte Winkel β₁₂ zwischen den Seitenwänden 9 und dem jeweiligen Flügel 11 sind annähernd 90°.

Die Stirnwand 8, die beiden Seitenwände 9 und die beiden Flügel 11 bilden das im Wesentlichen Omega-förmige erste Querschnittsprofil 12. Mit anderen Worten, die erste Sicke 6 und die beiden Flügel 11 an den freien Enden der Seitenwände 9 bilden das im Wesentlichen Omega-förmige erste Querschnittsprofil 12. Die Kanten an den Übergängen zwischen der Stirnwand 8 und den Seitenwänden 9 und zwischen den Seitenwänden 9 und den Flügeln 11 können abgerundet sein. In den Kanten an den Übergängen zwischen der Stirnwand 8 und den Seitenwänden 9 und zwischen den Seitenwänden 9 und den Flügeln 11 können nach innen oder nach außen gerichtete Sicken ausgebildet, bspw. eingeschlagen, sein.

Der Begriff "im Wesentlichen Omega-förmig" gemäß der vorliegenden Offenbarung kann auch einen Profilquerschnitt umfassen, bei dem Seitenwände 9 nach außen geneigt sind, so dass die erste Sicke 6 von oben nach unten verbreitert ist. Beispielsweise kann der Begriff ein trapezförmiges oder konisches Profil umfassen. Mit anderen Worten, die Winkel α₁₂ und β₁₂ können annähernd 90° oder größer als 90° oder größer als 100° oder größer als 120° sein. Die Winkel α₁₂ und β₁₂ können auf maximal 160° oder maximal 120° oder maximal 100° gegrenzt sein. Vorzugsweise sind die Winkel α₁₂ und β₁₂ annähernd gleich.

Die beiden Flügel 11 weisen jeweils eine Breite b3 auf. Die Breite b3 der Flügel 11 beträgt mindestens 5 mm oder mindestens 10 mm oder mindestens 20 mm und beträgt höchstens 50 mm oder höchstens 30 mm.

Die erste Sicke 6 weist eine Tiefe 11 auf, die der Höhe des in der ersten Sicke 6 gebildeten Raums 14 entspricht und die einer Höhe h12 des ersten Querschnittsprofils 12 abzüglich der Dicke des Blechteils im Bereich der Stirnwand 8 entspricht. Die Tiefe t1 der ersten Sicke 6 beträgt mindestens 10 mm oder mindestens 20 mm oder mindestens 25 mm oder mindestens 30 mm und beträgt höchstens 50 mm oder höchstens 40 mm oder höchstens 35 mm. Die Höhe h12 des ersten Querschnittsprofils 12 beträgt mindestens 11 mm oder mindestens 21 mm oder mindestens 26 mm und beträgt höchstens 55 mm oder höchstens 45 mm oder höchstens 40 mm.

Die erste Sicke 6 weist eine Breite b1 auf, die dem Abstand zwischen den Seitenwänden 9 an den unteren Enden der Seitenwände 9 entspricht. Die Breite b1 der ersten Sicke 6 beträgt mindestens 5 mm oder mindestens 20 mm oder mindestens 25 mm oder mindestens 30 mm und beträgt höchstens 50 mm oder höchstens 40 mm oder höchstens 35 mm.

Eine Breite b12 des ersten Querschnittsprofils 12 des Mittelabschnitts 2 entspricht der Summe der Breite b1 der ersten Sicke 6 und der Breiten b3 der beiden Flügel 11. Die Breite b12 des ersten Querschnittsprofils 12 beträgt mindestens 20 mm oder mindestens 30 mm oder mindestens 50 mm und beträgt höchstens 120 mm oder höchstens 80 mm.

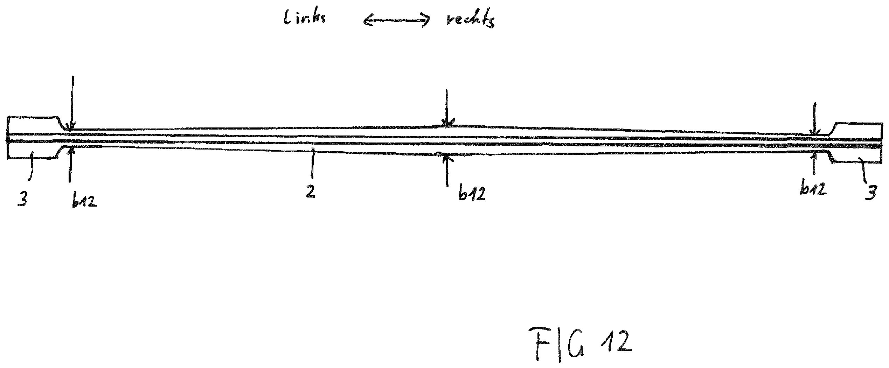

Das erste Querschnittsprofil 12 des Mittelabschnitts 2 ist entlang der Längserstreckungsrichtung des Mittelabschnitts 2 im Wesentlichen konstant. Alternativ kann sich das erste Querschnittsprofil 12 des Mittelabschnitts 2 entlang der Längserstreckungsrichtung ändern. Beispielsweise kann die Breite b3 der Flügel 11 entlang der Längserstreckungsrichtung variieren. Insbesondere kann die Breite b3 der Flügel 11 von der Mitte des Mittelteils 2 in der Längserstreckungsrichtung entlang der Längserstreckungsrichtung nach außen zu den Anbringungsabschnitten 3 hin abnehmen. Beispielsweise kann die Breite b3 der Flügel 11 von der Mitte des Mittelteils 2 nach außen zu den Anbringungsabschnitten 3 jeweils um mindestens 5 mm abnehmen, bzw. die Breite b3 kann von außen zu der Mitte des Mittelteils 2 hin zunehmen. Die Flügel 11 können also in der Mitte des Mittelteils 2 ausbauchen. Mit anderen Worten, die Breite b12 des ersten Querschnittsprofils 12 kann in einem in der Längserstreckungsrichtung mittig gelegenen Bereich des Mittelabschnitts 2 um mindestens 10 mm bis 50 mm größer sein als an den beiden Enden des Mittelabschnitts 2 in der Längserstreckungsrichtung, wie in Fig. 12 dargestellt ist. Dabei kann die Breite b1 der ersten Sicke 6 in der Längserstreckungsrichtung konstant bleiben. Die Abnahme der Breite b3 der Flügel 11 nach außen in der Längserstreckungsrichtung kann auf 20 mm begrenzt sein.

Das gezeigte erste Querschnittsprofil 12 des Mittelabschnitts 2 ist im Wesentlichen spiegelsymmetrisch. Das erste Querschnittsprofil 12 kann jedoch auch asymmetrisch sein. Beispielsweise können die beiden Flügel 11 des ersten Querschnittsprofils 12 unterschiedliche Breiten aufweisen.

Fig. 4B zeigt ein zweites Querschnittsprofil 13 des ersten Bereichs 3a des Anbringungsabschnitts 3 senkrecht zu der Längserstreckungsrichtung des Mittelabschnitts 2 bzw. senkrecht zu der Längserstreckungsrichtung des ersten Bereichs 3a. Das zweite Querschnittsprofil 13 ist im Wesentlichen Omega-förmig. Die zweite Sicke 7 des ersten Bereichs 3a wird durch eine Stirnwand 18 und zwei seitlich an die Stirnwand 18 anschließende Seitenwände 19 gebildet. Die Seitenwände 19 erstrecken sich im Wesentlichen senkrecht zu der Stirnwand 18, d.h., die in Fig. 4B gezeigten Winkel α₁₃ zwischen der Stirnwand 18 und der jeweiligen Seitenwand 19 sind annähernd 90°. An den der Stirnwand 18 gegenüberliegenden Enden der Seitenwände 19 ist jeweils ein Flügel 17 ausgebildet, der im Wesentlichen senkrecht zu der Seitenwand 19 weg von einem in der Sicke 7 gebildeten Raum 16 nach außen vorsteht, d.h., die in Fig. 4B gezeigten Winkel β₁₃ zwischen den Seitenwänden 19 und den jeweiligen Flügeln 17 sind annähernd 90°.

Die Stirnwand 18, die beiden Seitenwände 19 und die beiden Flügel 17 bilden das im Wesentlichen Omega-förmige zweite Querschnittsprofil 13. Mit anderen Worten, die zweite Sicke 7 und die beiden Flügel 17 an den freien Enden der Seitenwände 19 bilden das im Wesentlichen Omega-förmige zweite Querschnittsprofil 13. Die Kanten an den Übergängen zwischen der Stirnwand 18 und den Seitenwänden 19 und zwischen den Seitenwänden 19 und den Flügeln 17 können abgerundet sein.

Der Begriff "im Wesentlichen Omega-förmig" gemäß der vorliegenden Offenbarung kann auch einen Profilquerschnitt umfassen, bei dem die Seitenwänden 19 nach außen geneigt sind, so dass die zweite Sicke 7 von oben nach unten verbreitert ist. Mit anderen Worten, die Winkel α₁₃ und β₁₃ können annähernd 90° oder größer als 90° oder größer als 100° oder größer als 120° sein. Die Winkel α₁₃ und β₁₃ können auf maximal 160° oder maximal 120° oder maximal 100° gegrenzt sein. Vorzugsweise sind die Winkel α₁₃ und β₁₃ annähernd gleich.

Die Flügel 17 weisen jeweils eine Breite b4 auf. Die Breite b4 der Flügel 17 beträgt mindestens 15 mm oder mindestens 20 mm oder mindestens 25 mm und beträgt höchstens 70 mm oder höchstens 50 mm oder höchstens 30 mm. Beispielsweise ist die Breite b4 der Flügel 17 des zweiten Querschnittsprofils 13 größer als die Breite b3 der Flügel 11 des ersten Querschnittsprofils 12. Die Breite b4 der Flügel 17 des zweiten Querschnittsprofils 13 kann beispielsweise mindestens 5 mm größer als die Breite b3 der Flügel 11 des ersten Querschnittsprofils 12 sein.

Die zweite Sicke 7 weist eine Tiefe t2 auf, die der Höhe des in der zweiten Sicke 7 gebildeten Raums 16 entspricht und die einer Höhe h13 des zweiten Querschnittsprofils 13 abzüglich der Dicke des Blechteils im Bereich der Stirnwand 18 entspricht. Die Tiefe t2 der zweiten Sicke 7 beträgt mindestens 1 mm oder mindestens 1,5 mm oder mindestens 2 mm und beträgt höchstens 25 mm oder höchstens 10 mm oder höchstens 5 mm. Vorzugsweise ist die Tiefe t2 der zweiten Sicke 7 des ersten Bereichs 3a geringer als die Tiefe t1 der ersten Sicke 6 des Mittelabschnitts 2. Beispielsweise kann die Tiefe t2 der zweiten Sicke 7 um mindestens 10 mm geringer sein als die Tiefe t1 der ersten Sicke 6. Die Höhe h13 des zweiten Querschnittsprofils 13 beträgt mindestens 2 mm oder mindestens 3 mm oder mindestens 5 mm und beträgt höchstens 30 mm oder höchstens 20 mm oder höchstens 10 mm.

Die zweite Sicke 7 weist eine Breite b2 auf, die dem Abstand zwischen den Seitenwänden 19 an den unteren Enden der Seitenwände 19 entspricht. Die Breite b2 der zweiten Sicke 7 beträgt mindestens 10 mm oder mindestens 15 mm oder mindestens 20 mm und beträgt höchstens 50 mm oder höchstens 40 mm oder höchstens 35 mm. Vorzugsweise ist die Breite b2 der zweiten Sicke 7 des ersten Bereichs 3a im Wesentlichen gleich der Breite b1 der ersten Sicke 6 des Mittelabschnitts 2.

Eine Breite b13 des zweiten Querschnittsprofils 13 entspricht der Summe der Breite b2 der zweiten Sicke 7 und der Breiten b4 der beiden Flügel 17. Die Breite b13 des zweiten Querschnittsprofils 13 beträgt mindestens 30 mm oder mindestens 50 mm oder mindestens 70 mm oder mindestens 80 mm und beträgt höchstens 120 mm oder höchstens 80 mm.

Die Höhe h13 des zweiten Querschnittsprofils 13 ist geringer als die Höhe h12 des ersten Querschnittsprofils 12, d.h., das zweite Querschnittsprofil 13 ist flacher als das erste Querschnittsprofil 12. Beispielsweise kann die Höhe h13 des zweiten Querschnittsprofils 13 um mindestens 5 mm oder mindestens 10 mm oder mindestens 15 mm oder mindestens 20 mm geringer als die Höhe h12 des ersten Querschnittsprofils 12 sein. Der erste Bereich 3a mit dem flacheren zweiten Querschnittsprofil 13 ist zur Anbringung an dem Längsgurt 15 des Planenaufbaus geeignet.

Das zweite Querschnittsprofil 13 des ersten Bereichs 3a des Anbringungsabschnitts 3 ist entlang der Längserstreckungsrichtung des ersten Bereichs 3a im Wesentlichen konstant. Alternativ kann sich das zweite Querschnittsprofil 13 des ersten Bereichs 3a entlang der Längserstreckungsrichtung ändern. In einer alternativen Ausgestaltung kann der erste Bereich 3a ein im Wesentlichen flaches bzw. ebenes zweites Querschnittsprofil 13 ohne die zweite Sicke 7 aufweisen.

Wie in Fig. 3 gezeigt ist, verläuft die zweite Sicke 7 des ersten Bereichs 3a des Anbringungsabschnitts 3 kontinuierlich zu der ersten Sicke 6 des Mittelabschnitts 2. Die Stirnwand 18 der zweiten Sicke 7 des ersten Bereichs 3a ist durchgängig mit der Stirnwand 8 der ersten Sicke 6 des Mittelabschnitts 2 ausgebildet. Zwischen der Stirnwand 18 der zweiten Sicke 7 des ersten Bereichs 3a und der Stirnwand 8 der ersten Sicke 6 des Mittelabschnitts 2 ist keine Stufe ausgebildet, sondern die Stirnwand 18 ist stetig zu der Stirnwand 8 fortgesetzt.

Die Stirnwand 18 der zweiten Sicke 7 des ersten Bereichs 3a kann geradlinig zu der Stirnwand 8 der ersten Sicke 6 des Mittelabschnitts 2 entlang der Längserstreckungsrichtung des Mittelabschnitts 2 fortgesetzt sein oder kann zusammen mit dem gesamten ersten Bereich 3a zu der Stirnwand 8 der ersten Sicke 6 des Mittelabschnitts 2 bzw. der Längserstreckungsrichtung des Mittelabschnitts 2 bei einem Neigungswinkel bis zu 20° oder bis zu 10° in der Richtung geneigt sein, in der der zweite Bereich 3b des Anbringungsabschnitts 3 abgewinkelt ist. Der Neigungswinkel kann mindestens 1° oder mindestens 5° betragen. Im Falle einer Neigung kann zwischen der Stirnwand 18 der zweiten Sicke 7 des ersten Bereichs 3a und der Stirnwand 8 der ersten Sicke 6 des Mittelabschnitts 2 ein Knick oder eine Rundung ausgebildet sein.

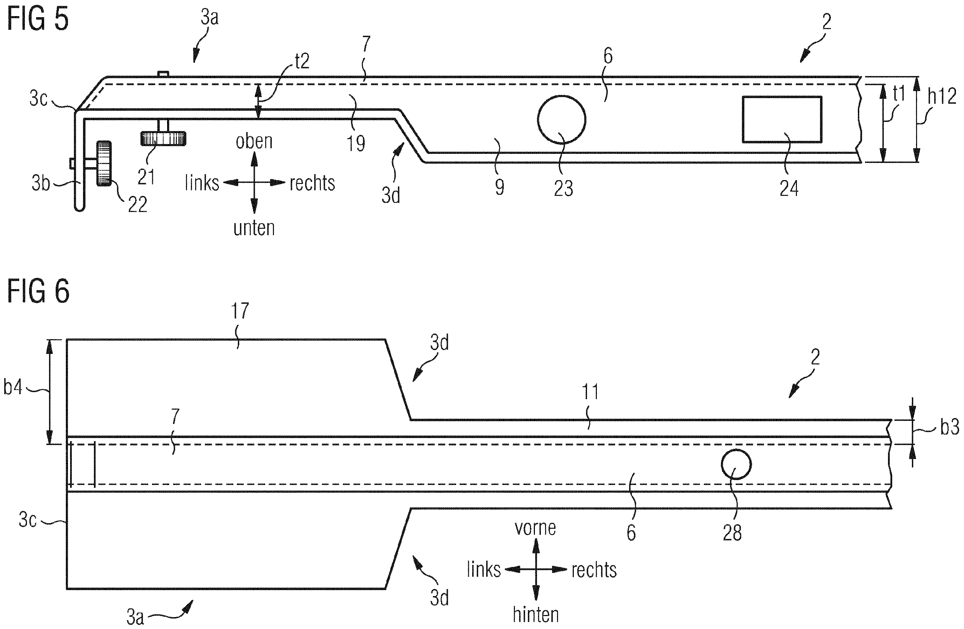

Zwischen den Seitenwänden 9 der ersten Sicke 6 des Mittelabschnitts 2 und den Seitenwänden 19 der zweiten Sicke 7 des ersten Bereichs 3a des Anbringungsabschnitts 3 und zwischen den Flügeln 11 des Mittelabschnitts 2 und den Flügeln 17 des ersten Bereichs 3a ist ein Übergangsbereich 3d ausgebildet, in dem das erste Querschnittsprofil 12 des Mittelabschnitts 2 in das zweite Querschnittsprofil 13 des ersten Bereichs 3a des Anbringungsabschnitts 3 übergeht. In dem Übergangsbereich 3d nimmt die Tiefe der Sicke von dem Tiefe t1 der ersten Sicke 6 zu der Tiefe t2 der zweiten Sicke 7 ab, indem die Höhe der Seitenwände der Sicke verringert wird, wie in Fig. 5 dargestellt ist. Die Breite der Flügel nimmt in dem Übergangsbereich 3d von der Breite b3 der Flügel 11 des Mittelabschnitts 2 zu der Breite b4 der Flügel 17 des ersten Bereichs 3a zu, wie in Fig. 6 dargestellt ist. In dem Übergangsbereich 3d wird der untere Teil der Seitenwände 9 der ersten Sicke 6 des Mittelabschnitts 2 nach außen gebogen, so dass er zu einem Teil der Flügel 17 des ersten Bereichs 3a des Anbringungsabschnitts 3 wird. Der obere Teil der Seitenwände 9 der ersten Sicke 6 verläuft kontinuierlich bzw. geradlinig zu dem oberen Teil der Seitenwände 19 der zweiten Sicke 7. Eine Länge des Übergangsbereichs 3d in der Längserstreckungsrichtung des Mittelabschnitts 2 beträgt höchstens 10 cm oder höchstens 5 cm oder höchstens 1 cm.

Durch die relativ breiten Flügel 17 des ersten Bereichs 3a wird in dem Anbringungsabschnitt 3 eine im Wesentlichen ebene Fläche zur Anbringung des Dachquerspriegels 1 an dem Längsgurt 15 des Planenaufbaus ausgebildet.

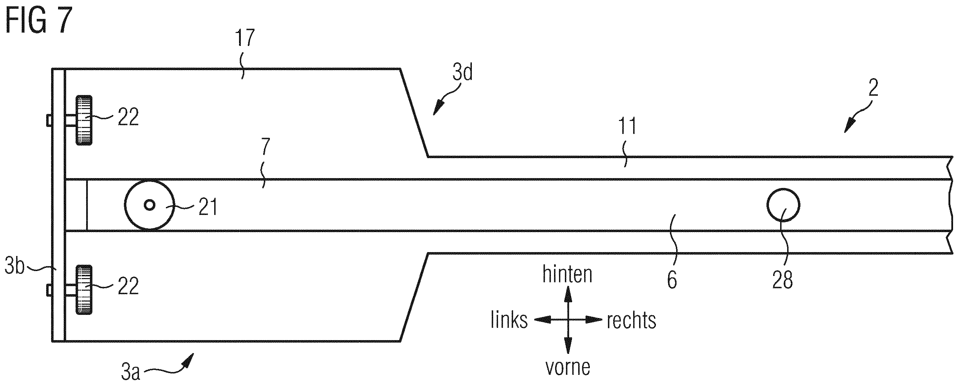

Wie in den Figuren 5 und 7 gezeigt ist, ist in dem ersten Bereich 3a des Anbringungsabschnitts 3 eine Führungsrolle 21 angebracht, die um eine in der Oben-Unten-Richtung verlaufende Achse drehbar ist. Die Führungsrolle 21 ist in dem Bereich der zweiten Sicke 7 angeordnet. Die Achse der Führungsrolle 21 verläuft durch ein Durchgangsloch in der Stirnwand 18 der zweiten Sicke 7 und ist daran befestigt. In dem zweiten Bereich 3b des Anbringungsabschnitts 3 sind zwei Laufrollen 22 angebracht, die um horizontal in der Längserstreckungsrichtung des Mittelabschnitts 2 verlaufende Achsen drehbar sind. Die Achsen der Laufrollen 22 verlaufen durch Durchgangslöcher in dem zweiten Bereich 3b und sind daran befestigt. Die Führungsrolle 21 und die Laufrollen 22 dienen zur verschiebbaren Anbringung des Anbringungsabschnitts 3 in einer Laufschiene an dem Längsgurt 15 des Planenaufbaus.

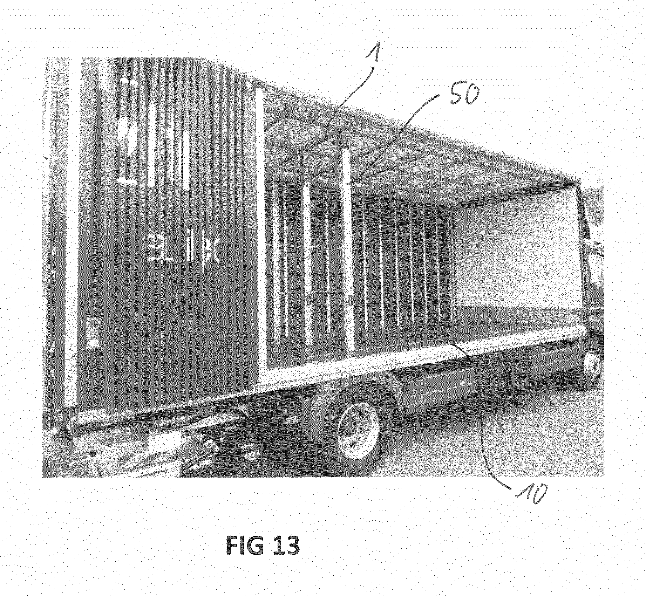

Wie in Fig. 5 gezeigt ist, sind in der Seitenwand 9 der Sicke 6 des Mittelabschnitts 2 ein rundes Loch 23 und ein rechteckiges Loch 24 ausgebildet. Der Durchmesser des runden Lochs 23 und die Breite und die Länge des rechteckigen Lochs 24 liegen jeweils in einem Bereich von 5 mm bis 30 mm oder bis 50 mm oder von 10 mm bis 25 mm. Das runde Loch 23 und das rechteckige Loch 24 dienen zur Anbringung von Ladungssicherungselementen, wie beispielsweise Zurrgurten, Zurrketten, Sperrstangen, oder Seilen. An den Rändern der Löcher 23 und 24 können Haken oder Ringe beispielsweise mit daran angebrachten Rollen zur Führung von Zurrgurten, Zurrketten oder Seilen eingehängt werden. Mittels der Löcher 23, 24 kann eine Sicherungsstange (Sperrstange) 50 an dem Dachquerspriegel 1 angebracht werden. Derartige Sicherungs- bzw. Sperrstangen 50, die in einer vertikalen Richtung von der Dachkonstruktion zu dem Ladeboden 10 verlaufen sind beispielsweise in Fig. 13 dargestellt. Beispielsweise kann an den Rändern der Löcher 23 und 24 ein Haken eingehängt werden, der an einem Ende einer Sicherungsstange 50 ausgebildet ist. Zur formschlüssigen Anbringung der Sicherungs- bzw. Sperrstange 50 können die Löcher 23, 24 beispielsweise L- oder T-förmig ausgebildet sein. Das untere Ende der Sicherungsstange 50 kann ein rutschhemmendes Material wie beispielsweise einen rutschhemmenden Gummi (Gummifuß) zur Fixierung auf dem Ladeboden 10 aufweisen oder kann in einer Öffnung oder einer Zurrschiene in dem Ladeboden 10 angebracht werden. Das untere Ende der Sicherungsstange 50 kann mittels einen Schnellspanners am Ladeboden 10 befestigt werden.

Die Löcher 23 und 24 können auch in anderen Bereichen des Dachquerspriegels 1, wie beispielsweise in den Flügeln 11, 17 des Mittelabschnitts 2 und/oder der Anbringungsabschnitte 3, in den Seitenwänden 19 der zweiten Sicke 7 der Anbringungsabschnitte 3, in den Stirnwänden 8, 18 der ersten Sicke 6 des Mittelabschnitts 2 und/oder der zweiten Sicke 7 der Anbringungsabschnitte 3, und/oder in den zweiten Bereichen 3b der Anbringungsabschnitte 3 oder den Übergangsbereichen 3d ausgebildet sein. Die Löcher können eine von den gezeigten Löchern 23, 24 abweichende Form, wie beispielsweise eine elliptische Form, aufweisen.

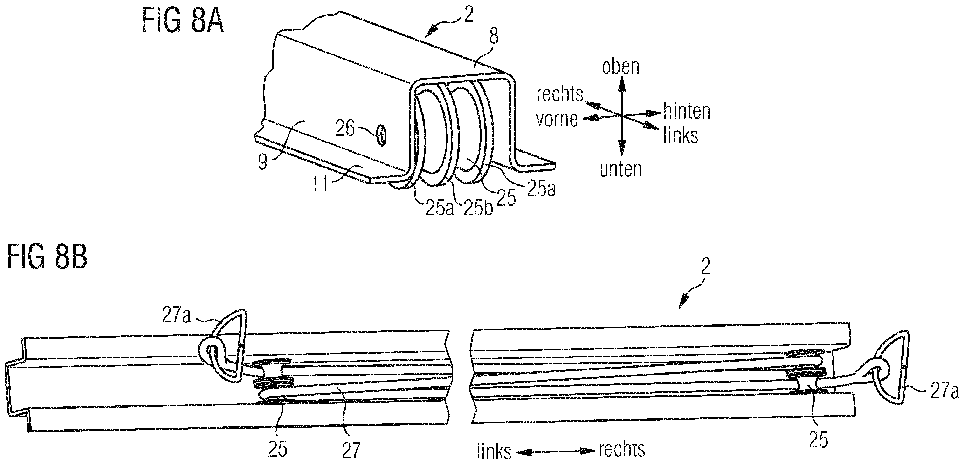

Fig. 8A zeigt eine perspektivische Ansicht des Mittelabschnitts 2, der an einer Stelle in der Längserstreckungsrichtung des Mittelabschnitts 2 senkrecht zu der Längserstreckungsrichtung abgeschnitten ist. In dem Raum 14 der ersten Sicke 6 des Mittelabschnitts 2 ist eine Rolle 25 montiert. Die Rolle 25 ist um ein Achse (nicht gezeigt), die sich senkrecht zu der Längserstreckungsrichtung des Mittelabschnitts 2 und senkrecht zu der Oben-Unten-Richtung zwischen den beiden Seitenwänden 9 der ersten Sicke 6 des Mittelabschnitts 2 erstreckt, drehbar. Die Achse verläuft durch Durchgangslöcher 26 in den Seitenwänden 9 und ist daran befestigt. Die Rolle 25 dient zur Führung eines Seils, beispielsweise eines Expanderseils, das zur Ladungssicherung verwendet werden kann. Bei der Rolle 25 handelt es sich um eine Doppelrolle mit zwei äußeren Stegen 25a und einem mittleren Steg 25b zur Führung des Seils.

Wie in Fig. 8B gezeigt ist, sind zwei Rollen 25 auf gegenüberliegenden Seiten in der Längserstreckungsrichtung des Mittelabschnitts 2 in dem Raum 14 der ersten Sicke 6 des Mittelabschnitts 2 montiert. Ein zwischen den zwei Rollen 25 verlaufendes Expanderseil 27 kann in dem Raum 14 der ersten Sicke 6 geführt werden. Das Expanderseil 27 ist in Fig. 8B über die Rolle 25 auf der linken Seite des Mittelabschnitts 2 geführt, verläuft von dort um die Rolle 25 auf der rechten Seite des Mittelabschnitts 2, verläuft von dort wieder zurück um die Rolle 25 auf der linken Seite und wird abschließend über die Rolle 25 auf der rechten Seite geführt. An den beiden Enden des Expanderseils 27 können Haken oder Ringe oder Ösen 27a befestigt sein, an denen jeweils ein Ende eines Ladungssicherungsgurtes angebracht werden kann. Das in dem Raum 14 geführte Expanderseil 27 ist wird durch die Stirnwand 8 und die Seitenwände 9 der ersten Sicke 6 des Mittelabschnitts 2 geschützt und ist innerhalb des Raums 14 bzw. der ersten Sicke 6 verborgen. Bei Bedarf kann das Expanderseil 27 aus dem Raum 14 gezogen werden. Die beiden Enden des Expanderseils 27 können beispielsweise nach unten gezogen werden.

Wie in den Figuren 3, 6 und 7 gezeigt ist, sind in der Stirnwand 8 der ersten Sicke 6 des Mittelabschnitts 2 mehrere Löcher 28 ausgebildet. Die Löcher 28 dienen zur lösbaren Anbringung der Plane des Planenaufbaus auf dem Dachquerspriegel 1, beispielsweise mittels Kunststoffnieten oder Kunststoffclips, die durch die Löcher 28 geführt werden. Die Löcher 28 weisen einen Durchmesser von mindestens 3 mm oder mindestens 5 mm oder mindestens 10 mm und von höchstens 25 mm oder höchstens 20 mm oder höchstens 10 mm auf.

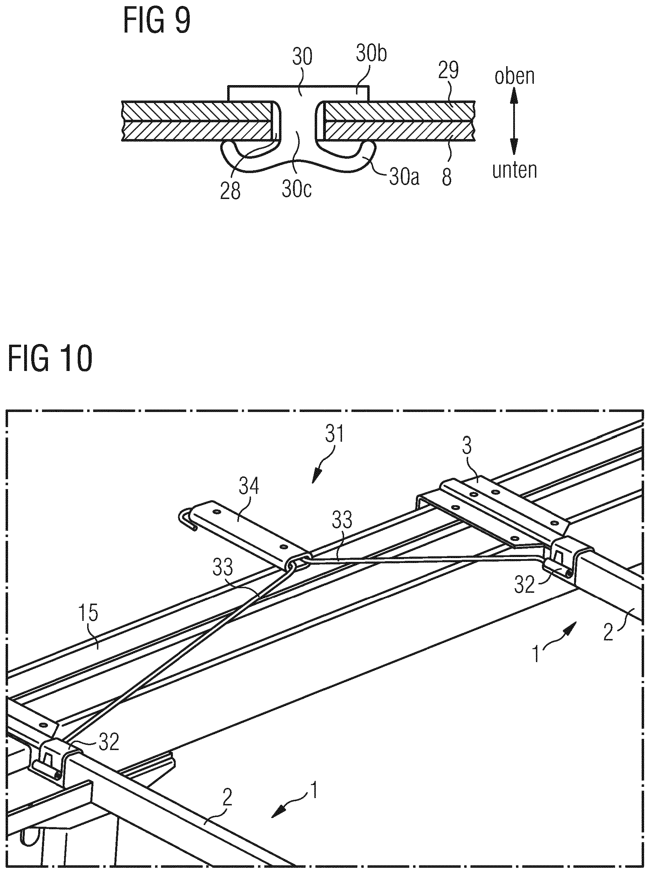

Fig. 9 zeigt einen Querschnitt der Stirnwand 8 der ersten Sicke 6 im Bereich eines der Löcher 28. Auf der Stirnwand 8 liegt von oben eine Plane 29 des Planenaufbaus auf. Die Plane 29 ist durch einen Kunststoffclip 30 an der Stirnwand 8 angebracht. Der Kunststoffclip 30 weist Widerhaken 30a, einen Auflagebereich 30b und einen Schaft 30c, der den Auflagebereich 30b und die Widerhaken 30a verbindet, auf. Der Schaft 30c ist durch das Durchgangsloch 28 in der Stirnwand 8 und durch ein entsprechendes Loch in der Plane 29 geführt. Die Widerhaken 30b greifen von unten in den Randbereich des Lochs 28 in der Stirnwand 8 und verhindern ein Herausziehen des Kunststoffclips 30 nach oben. Der Auflagebereich 30b liegt auf der Plane 29 auf und drückt die Plane 29 gegen die Stirnwand 8. Anstelle des gezeigten Kunststoffclips 30 können auch andere Befestigungsmittel, wie beispielsweise anders ausgebildete Kunststoffclips oder Kunststoffniete, zur Anbringung der Plane 29 an dem Dachquerspriegel 1 verwendet werden. Die Löcher 28 können an einer anderen Stelle in einer Oberfläche auf der Oberseite des Dachquerspriegels 1 ausgebildet sein.

Mehrere Exemplare des Dachquerspriegels 1 können zur Ausbildung einer Schiebeverdeckstruktur verwendet werden, wie in Fig. 1 gezeigt ist. An den Außenbereichen jedes Dachquerspriegels 1, d.h. an den Anbringungsbereichen 3 oder an den Enden des Mittelabschnitts 2, können Kunststofffaltplatten angebracht werden, auf denen die Plane 29 aufliegen kann.

Alternativ zu den Kunststofffaltplatten können Bügelvorrichtungen 31 zur Auflage der Plane 29 an den Dachquerspriegeln 1 angebracht werden, wie in Fig. 10 gezeigt ist. Jede Bügelvorrichtung 31 weist zwei Bügelelemente 33 und ein Auflageelement 34 auf. Die Bügelvorrichtung 31 ist zwischen zwei benachbarten Dachquerspriegeln 1 angebracht. Jedes der beiden Bügelelemente 33 ist jeweils an einem der beiden benachbarten Dachquerspriegel 1 über ein Verbindungselement 32 angebracht. Alternativ können die Bügelelemente 33 auch direkt mit den Dachquerspriegeln 1, beispielsweise über daran angeschweißte Ösen oder Hülsen, verbunden werden.

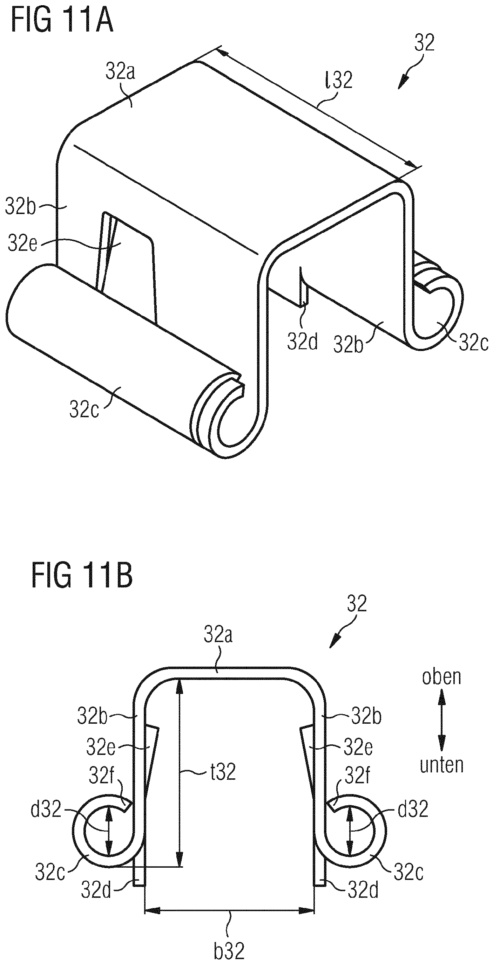

Fig. 11A zeigt eine perspektivische Ansicht eines Verbindungselements 32. Fig. 11B zeigt eine Ansicht des Verbindungselements 32 in der Längserstreckungsrichtung des Mittelabschnitts 2 betrachtet, die das Querschnittsprofil des Verbindungselements 32 zeigt. Das Verbindungselement 32 ist beispielsweise aus einem Blechteil ausgebildet. Das Blechteil weist eine Dicke in einem Bereich von 0,5 mm bis 10 mm auf. Alternativ kann das Blechteil eine Dicke in einem Bereich von 1,5 mm bis 3 mm oder bis 2,5 mm oder in einem Bereich von 1,8 mm bis 2,3 mm aufweisen. Das Blechteil kann aus einem geeigneten Metall, wie Eisen oder Stahl, beispielsweise aus S235JR, S355JO, QStE-Stahl, QStE340TM, QStE380TM, QStE690TM, ausgebildet sein.

Das Verbindungselement 32 weist ein im Wesentlichen Omega-förmiges Querschnittsprofil ähnlich dem ersten Querschnittsprofil 12 des Mittelabschnitts 2 des Dachquerspriegels 1 auf. Das Verbindungselement 32 weist eine Stirnwand 32a und zwei Seitenwände 32b an den beiden Enden der Stirnwand 32a auf. Die beiden Seitenwände 32b verlaufen im Wesentlichen senkrecht zu der Stirnwand 32a. Der Abstand b32 zwischen den beiden Seitenwänden 32b entspricht im Wesentlichen der Breite b1 der ersten Sicke 6 zuzüglich zweimal der Dicke der Seitenwände 9 des Mittelabschnitts 2.

Anstelle der beiden Flügel 11 des ersten Querschnittsprofils 12 des Mittelabschnitts 2 ist an den der Stirnwand 32a gegenüberliegenden Enden der Seitenwände 32b des Verbindungselements 32 jeweils ein Hülsenabschnitt 32c ausgebildet. Der Hülsenabschnitt 32c ist durch Umformen der Enden des Blechteils in eine im Wesentlichen zylindrische Form ausgebildet. Das distale Ende 32f des Blechteils kann außen an der jeweiligen Seitenwand 32b, an deren Ende der Hülsenabschnitt 32c ausgebildet ist, anliegen. Alternativ kann ein Abstand von 5 mm oder weniger zwischen dem distalen Ende 32f des Bleichteils und der Seitenwand 32b ausgebildet sein. Wie in Fig. 11B gezeigt ist, weist der Hülsenabschnitt 32c einen im Wesentlichen kreisförmigen Querschnitt auf. Der Durchmesser d32 des im Wesentlichen kreisförmigen Querschnitts des Hülsenabschnitts 32c liegt in einem Bereich von 2 mm bis 15 mm.

Der vertikale Abstand t32 zwischen der dem Hohlraum zwischen den Seitenwänden 32b zugewandten Unterseite der Stirnwand 32a und einem unteren Ende der Hülsenabschnitte 32c entspricht im Wesentlichen der Höhe h12 des ersten Querschnittsprofils 12 des Mittelabschnitts 2 abzüglich der Dicke der Flügel 11. Mit anderen Worten, das Verbindungselement 32 ist so ausgebildet, dass es auf den Mittelabschnitt 2 des Dachquerspriegels 1 ohne oder mit geringem Abstand zwischen der Stirnwand 32a des Verbindungselements 32 und der Stirnwand 8 des Mittelabschnitts 2 und zwischen den Seitenwänden 32b des Verbindungselements 32 und den Seitenwänden 9 des Mittelabschnitts 2 aufgesetzt werden kann, wie in Fig. 10 gezeigt ist. Das untere Ende der Hülsenabschnitte 32c liegt jeweils auf einer Oberseite des entsprechenden Flügels 11 des ersten Querschnittsprofils 12 des Mittelabschnitts 2 auf. Die Länge l32 des Verbindungselements 32 liegt in einem Bereich von 2 cm bis 20 cm.

Das Verbindungselement 32 weist zwei Vorsprungabschnitte 32d auf, die jeweils von einer der beiden Seitenwände 32b nach unten vorstehen. Jeder der beiden Vorsprungabschnitte 32d ist aus einem zu der jeweiligen Seitenwand 32b geradlinig nach unten fortgesetzten Abschnitt des Blechteils, aus dem das Verbindungselement 32 ausgebildet ist, ausgebildet, der nicht zur Ausbildung des Hülsenabschnitts 32c umgeformt ist. Die Vorsprungabschnitte 32d greifen in entsprechende Öffnungen (nicht gezeigt) in den Flügeln 11 des Mittelabschnitts 2 ein und verhindern dadurch, dass das Verbindungselement 32 entlang der Längserstreckungsrichtung des Mittelabschnitts 2 verschoben wird.

Die beiden Seitenwände 32b des Verbindungselements 32 weisen jeweils eine Lasche 32e auf, die nach innen in den Innenraum zwischen den Seitenwänden 32b und der Stirnwand 32a vorstehen. Die Laschen 32e greifen in entsprechende Öffnungen (nicht gezeigt) in den Seitenwänden 9 des Mittelabschnitts 2 ein und sichern die Position des auf den Mittelabschnitt 2 aufgesetzten Verbindungselements 32 in der vertikalen Richtung. Die Laschen 32e rasten beim Aufsetzen des Verbindungselements 32 auf dem Mittelabschnitt 2 in die entsprechenden Öffnungen in den Seitenwänden 9 des Mittelabschnitts 2 ein und verhindern, dass das Verbindungselement 32 nach oben vom dem Mittelabschnitt 2 entfernt wird oder sich lösen kann.

Die Vorsprungabschnitte 32d und die Laschen 32e können jedoch auch weggelassen werden. Das Verbindungselement 32 kann an dem Mittelabschnitt 2 des Dachquerspriegels 1 angeschweißt werden. Alternativ können die Verbindungselemente 32 weggelassen werden und es können Hülsen ähnlich den Hülsenabschnitten 32c direkt an den Dachquerspriegeln 1 angeschweißt werden.

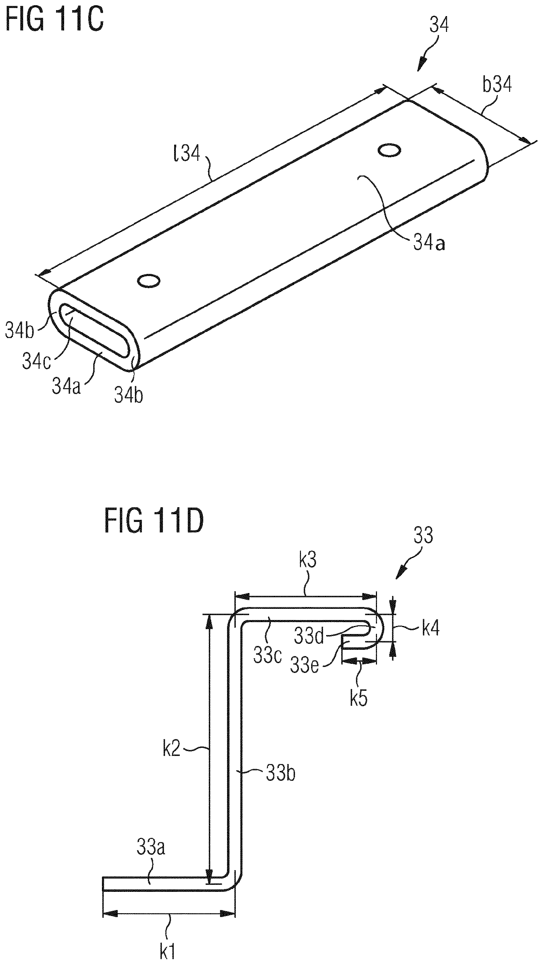

Fig. 11C zeigt eine perspektivische Ansicht des Auflageelements 34. Das Auflageelement 34 kann aus einem Blechteil mit einer Dicke in einem Bereich von 0,5 mm bis 5 mm ausgebildet sein. Das Blechteil kann auch aus Polymer bzw. Kunststoff oder Metall/Stahl ausgebildet sein. Das Auflageelement 34 ist als längliche Hülse ausgebildet und weist zwei gegenüberliegende, im Querschnitt senkrecht zur Längserstreckungsrichtung geradlinig und parallel zueinander verlaufende Wandabschnitte 34a und zwei im Querschnitt halbkreisförmige Wandabschnitte 34b, die die Enden der geradlinig verlaufenden Wandabschnitte 34a miteinander verbinden, auf. Zwischen den geradlinig verlaufenden Wandabschnitten 34a und den halbkreisförmigen Wandabschnitten 34b ist ein Hohlraum 34c ausgebildet. Der Abstand zwischen den geradlinig und parallel zueinander verlaufenden Wandabschnitten 34a liegt in einem Bereich von 1 mm bis 20 mm. Die Breite b34 der geradlinig verlaufenden Wandabschnitte 34a liegt in einem Bereich von 0,5 mm bis 50 mm. Die Länge l34 des Auflageelements 34 in der Längserstreckungsrichtung liegt in einem Bereich von 20 mm bis 300 mm.

Fig. 11D zeigt eines der beiden Bügelelemente 33. Das Bügelelement 33 ist aus einem Metalldraht mit ausreichend hoher Steifigkeit, beispielsweise einem Federdraht bzw. Federstahldraht, mit einem bevorzugt runden Querschnitt und einem Durchmesser im Bereich von 1 mm bis 10 mm oder im Bereich von 5 mm bis 8 mm ausgebildet.

Das Bügelelement 33 weist einen ersten Abschnitt 33a, der sich im Wesentlichen geradlinig erstreckt, auf. Die Länge k1 des ersten Abschnitts 33a liegt in einem Bereich von 20 mm bis 200 mm.

Das Bügelelement 33 weist ferner einen zweiten Abschnitt 33b, der sich im Wesentlichen geradlinig erstreckt, auf. Der zweite Abschnitt 33b ist an einem Ende mit einem Ende des ersten Abschnitts 33a verbunden und erstreckt sich im Wesentlichen senkrecht zu dem ersten Abschnitt 33a. Die Länge k2 des zweiten Abschnitts 33b liegt in einem Bereich von 50 mm bis 700 mm oder im Bereich von 25 cm bis 50 cm.

An dem anderen Ende ist der zweite Abschnitt 33b mit einem dritten Abschnitt 33c verbunden, der sich im Wesentlichen geradlinig erstreckt. Der dritte Abschnitt 33c erstreckt sich im Wesentlichen parallel zu dem ersten Abschnitt 33a und im Wesentlichen senkreckt zu dem zweiten Abschnitt 33b. Der erste Abschnitt 33a und der dritte Abschnitt 33c erstrecken sich in entgegengesetzten Richtungen von dem zweiten Abschnitt 33b. In einer alternativen Ausgestaltung können sich der erste Abschnitt 33a und der dritte Abschnitt 33c auch in derselben Richtung erstrecken. Die Länge k3 des dritten Abschnitts liegt in einem Bereich von 20 mm bis 400 mm.

An dem dem zweiten Abschnitt 33b gegenüberliegenden Ende ist der dritte Abschnitt 33c mit einem vierten Abschnitt 33d verbunden. Der vierte Abschnitt 33d erstreckt sich in der selben Richtung wie der zweite Abschnitt 33b von dem dritten Abschnitt 33c und erstreckt sich im Wesentlichen senkrecht zu dem dritten Abschnitt 33c. Die Länge k4 des vierten Abschnitts 33d liegt in einem Bereich von 4 mm bis 40 mm.

An dem dem dritten Abschnitt 33c gegenüberliegenden Ende ist der vierte Abschnitt 33d mit einem fünften Abschnitt 33e verbunden. Der fünfte Abschnitt 33e erstreckt sich geradlinig und im Wesentlichen parallel zu dem dritten Abschnitt 33c in Richtung auf den zweiten Abschnitt 33b. Die Länge k5 des fünften Abschnitts 33e liegt in einem Bereich von 5 mm bis 50 mm.

In der Darstellung in Fig. 11D liegt das Bügelelement 33 in der Zeichenebene, d.h. der erste bis fünfte Abschnitt 33a bis 33e liegen im Wesentlichen in einer Ebene. Die Verbindungen zwischen den jeweiligen Abschnitten 33a bis 33e sind gerundet.

In dem zusammengebauten Zustand der Bügelvorrichtung 31, der in Fig. 10 gezeigt ist, sind jeweils zwei Bügelelemente 33 mit einem Auflageelement 34 verbunden, indem die dritten Abschnitte 33c der beiden Bügelelemente 33 durch den Hohlraum 34c in dem Auflageelement 34 verlaufen. Das Auflageelement 34 ist im Wesentlichen in der Mitte zwischen zwei benachbarten Dachquerspriegeln 1 angeordnet.

Die zweiten Abschnitte 33b der beiden Bügelelemente 33 erstrecken sich zu den beiden benachbarten Dachquerspriegeln 1. An jedem der beiden Dachquerspriegel 1 ist jeweils ein Verbindungselement 32 angebracht, das auf die Sicke 7 des Mittelabschnitts 2 angrenzend an den Übergangsbereich 3d zwischen dem Mittelabschnitt 2 und dem Anbringungsabschnitt 3 aufgesetzt ist. Der erste Abschnitt 33a jedes Bügelelements 33 ist in den Hülsenabschnitt 32c des entsprechenden Verbindungselements 32 auf der dem anderen der beiden Dachquerspriegel 1 zugewandten Seite eingefügt. Das Bügelelement 33 wird durch den Hülsenabschnitt 32c um die Erstreckungsrichtung des ersten Abschnitts 33a drehbar gelagert.

Die vierten und die fünften Abschnitte 33d und 33c der beiden Bügelelemente 33 ragen auf der dem zweiten Abschnitt 33b gegenüberliegenden Seite aus dem Hohlraum 34c des Auflageelements 34 und umgreifen das entsprechende Ende des Auflageelements 34. Die Länge k3 des dritten Abschnitts 33c jedes Bügelelements 33, die Länge k4 des vierten Abschnitts 33d die Länge k5 des fünften Abschnitts 33e und die Länge l34 des Auflageelements 34 sind derart gewählt, dass das Bügelelement 33 um die Erstreckungsrichtung des dritten Abschnitts 33c drehbar in dem Hohlraum 34c des Auflageelements 34 gelagert wird, und dass gleichzeitig durch den vierten Abschnitt 33d und den fünften Abschnitt 33e verhindert wird, dass sich das Auflageelement 34 und das Bügelelement 33 voneinander lösen. D.h., die Länge k3 des dritten Abschnitts 33c entspricht im Wesentlichen der Länge l34 des Auflageabschnitts 34 zuzüglich der Dicke des Drahts, aus dem das Bügelelement 33 ausgebildet ist.

In Fig. 10 ist lediglich eine Bügelvorrichtung 31 auf einer Seite in der Längserstreckungsrichtung der beiden Dachquerspriegel 1, d.h. auf einer der beiden Seiten des Sattelanhängers 5, dargestellt. Auch auf der anderen Seite des Sattelanhängers 5 kann eine Bügelvorrichtung 31 zwischen den beiden Dachquerspriegeln 1 angebracht sein. Zudem können auch in dem mittleren Bereich des Mittelabschnitts 2 in der Längserstreckungsrichtungen eine oder mehrere Bügelvorrichtungen 31 angebracht sein.

Die Schiebeverdeckstruktur kann mehr als die zwei in Fig. 10 gezeigten Dachquerspriegel 1 aufweisen. Die Bügelvorrichtungen 31 können zwischen bestimmten oder zwischen allen benachbarten Dachquerspriegeln 1 angebracht sein. Somit kann in jeden der beiden Hülsenabschnitte 32c des Verbindungselements 32 jeweils ein erster Abschnitt 33a eines Bügelelements 33 eingefügt sein.

In einem geschlossenen Zustand der Schiebeverdeckstruktur, in dem die Plane 29 flach, d.h. nicht gefaltet, auf dem Dach des Planenaufbaus aufliegt, entspricht der Abstand zwischen den beiden Dachquerspriegeln 1 beinahe der doppelten Länge k2 des zweiten Abschnitts 33b der Bügelabschnitte 33. In diesem Zustand liegt der untere der beiden geradlinig verlaufenden Wandabschnitte 34a des Auflageelements 34 auf dem Längsgurt 15 des Planenaufbaus auf. Die Plane 29 liegt auf dem oberen der beiden geradlinig verlaufenden Wandabschnitte 34a des Auflageelements 34, der eine ebene Auflagefläche bildet, auf. Die zweiten Abschnitte 33b der beiden Bügelelemente 33 verlaufen von den Verbindungselementen 32 mit einer geringen Steigung (beispielsweise 10° oder weniger in Bezug auf eine horizontal Ebene) nach oben oder horizontal zu dem Auflageelement 34. D.h., die zweiten Abschnitte 32 verlaufen beinahe horizontal oder horizontal.

Beim Öffnen der Schiebeverdeckstruktur werden die Dachquerspriegel 1 zusammengeschoben, d.h., der Abstand zwischen den benachbarten Dachquerspriegeln 1 wird verkürzt. Dadurch werden die Bügelelemente 33 in den Hülsenabschnitten 32c der Verbindungselemente 32 um die Erstreckungsrichtung der ersten Abschnitte 33a gedreht, so dass die Steigung der zweiten Abschnitte 33b vergrößert wird und das Auflageelement 34 zusammen mit der darauf aufliegenden Plane 29 angehoben wird. Die Plane 29 wird zusammenfaltet.

Die Steifigkeit des Drahts, aus dem die Bügelelemente 33 ausgebildet sind, ist so hoch gewählt, dass sich die Bügelelemente 33 bei normaler Belastung nicht wesentlich verformen.

Eine Schiebeverdeckstruktur für einen Nutzfahrzeug- oder Anhängeraufbau weist üblicherweise am hinteren Ende des Aufbaus einen Endwagen auf, an dem beispielsweise Türverschlüsse angebracht sein können. Anstelle eines speziell ausgebildeten Endwagens können zwei parallel zueinander verlaufende Dachquerspriegel 1 zur Ausbildung eines Endwagens miteinander verbunden werden. Die beiden Dachquerspriegel 1 können insbesondere starr, d.h. mit festem Abstand zueinander, verbunden sein. Der Abstand zwischen den beiden Dachquerspriegeln 1 kann geringer sein als die Abstände zwischen den übrigen Dachquerspriegel 1. Eine derartige Konstruktion ist einfach und kostengünstig herzustellen. Die Türverschlüsse können an den miteinander verbundenen Dachquerspriegeln 1 angebracht werden.

Es sei angemerkt, dass die Merkmale der oben beschriebenen bevorzugten Ausführungsform auch unabhängig voneinander verwendet werden können, ohne dabei von der vorliegenden Offenbarung abzuweichen. Insbesondere kann der Dachquerspriegel ohne die gezeigten Rollen 25 innerhalb der ersten Sicke 6 und/oder ohne die gezeigten Löcher 23, 24, 28 ausgebildet sein. Die Rollen 25 zur Führung des Expanderseils 27 können auch bei einem Dachquerspriegel mit einem anderen als dem gezeigten Omega-förmigen Querschnittsprofil, beispielsweise bei einem Dachquerspriegel mit einem geschlossenen Hohlprofil, verwendet werden.

Beispielsweise können die Rollen 25 zur Führung des Expanderseils 27 bei einem Dachquerspriegel mit einem Schaftabschnitt, der aus einem Hohlprofil ausgebildet ist, innerhalb des Hohlprofils angebracht sein.

Die im Anspruch 12 definierte Schiebeverdeckstruktur kann auch in Verbindung mit anderen Spriegeln, die beispielsweise nicht einteilig ausgebildet sind, verwendet werden. Die Verbindungselemente 32 können auch an herkömmlichen Spriegeln angebracht werden. Die Ausgestaltung der Verbindungselemente kann an die Ausgestaltung der jeweiligen Spriegel angepasst werden.

## Patentansprüche

1. Einteiliger Spriegel (1) für einen Nutzfahrzeug- oder Anhängeraufbau, der durch Umformen aus einem Blechteil ausgebildet ist, mit:
- einem länglichen Mittelabschnitt (2) mit einer in der Längserstreckungsrichtung des Mittelabschnitts (2) verlaufenden ersten Sicke (6), welcher Mittelabschnitt (2) senkrecht zur Längserstreckungsrichtung ein erstes Querschnittsprofil (12) aufweist, und
- zwei Anbringungsabschnitten (3) zur Anbringung an dem Nutzfahrzeug- oder Anhängeraufbau, die einstückig mit dem Mittelabschnitt (2) an den beiden Enden des Mittelabschnitts (2) ausgebildet sind, wobei jeder der beiden Anbringungsabschnitte (3) umfasst:
a) einen dem Mittelabschnitt (2) zugewandten ersten Bereich (3a), der senkrecht zur Längserstreckungsrichtung des Mittelabschnitts (2) ein im Vergleich zu dem ersten Querschnittsprofil (12) flacheres zweites Querschnittsprofil (13) aufweist, und
b) einen von dem Mittelabschnitt (2) abgewandten zweiten Bereich (3b), der im Wesentlichen senkrecht zu der Längserstreckungsrichtung des Mittelabschnitts (2) in der zu der ersten Sicke (6) entgegengesetzten Richtung abgewinkelt ist,
**dadurch gekennzeichnet, dass**
das erste Querschnittsprofil (12) im Wesentlichen Omega-förmig ist, und
eine Breite (b12) des ersten Querschnittsprofils (12) von den Enden des Mittelabschnitts (2) in der Längserstreckungsrichtung zu der Mitte des Mittelabschnitts (2) um mindestens 10 mm zunimmt.

2. Spriegel (1) nach Anspruch 1, wobei der erste Bereich (3a) jedes der beiden Anbringungsabschnitte (3) eine kontinuierlich mit der ersten Sicke (6) verlaufende zweite Sicke (7) aufweist und das zweite Querschnittsprofil (13) im Wesentlichen Omega-förmig ist.

3. Spriegel (1) nach Anspruch 2, wobei die zweite Sicke (7) eine um mindestens 10 mm geringere Tiefe (t2) aufweist als die erste Sicke (6).

4. Spriegel (1) nach Anspruch 2 oder 3, wobei die zweite Sicke (7) von dem ersten Bereich (3a) der Anbringungsabschnitte (3) außen um eine Kante (3c) zwischen dem ersten Bereich (3a) und dem zweiten Bereich (3b) verläuft.

5. Spriegel (1) nach einem der vorhergehenden Ansprüche, wobei das zweite Querschnittsprofil (13) eine Breite (b13) von mindestens 50 mm aufweist.

6. Spriegel (1) nach einem der vorhergehenden Ansprüche, wobei die erste Sicke (6) eine Tiefe (t1) von mindestens 25 mm und eine Breite (b1) von mindestens 25 mm aufweist.

7. Spriegel (1) nach einem der vorhergehenden Ansprüche, wobei eine Breite (b12) des ersten Querschnittsprofils (12) in der Mitte des Mittelabschnitts (2) mindestens 70 mm beträgt.

8. Spriegel (1) nach einem der vorhergehenden Ansprüche, wobei in dem ersten Bereich (3a) und in dem zweiten Bereich (3b) der Anbringungsabschnitte (3) jeweils mindestens eine Rolle (21, 22) zur verschiebbaren Anbringung des Spriegels (1) in einer Laufschiene eines Längsgurtes (15) des Nutzfahrzeug- oder Anhängeraufbaus angebracht ist.

9. Spriegel (1) nach einem der vorhergehenden Ansprüche, wobei in dem Mittelabschnitt (2) und/oder in den Anbringungsabschnitten (3) mindestens ein Loch (23, 24) mit einem Durchmesser in einem Bereich von 5 mm bis 30 mm zur Befestigung von Ladungssicherungselementen ausgebildet ist.

10. Spriegel (1) nach einem der vorhergehenden Ansprüche, wobei in der ersten Sicke (6) des Mittelabschnitts (2) mindestens eine Rolle (25) zur Führung eines Seils (27) oder eines Gurtes angebracht ist.

11. Spriegel (1) nach einem der vorhergehenden Ansprüche, wobei in dem Mittelabschnitt (2) und/oder den Anbringungsabschnitten (3) mindestens ein Loch (28) und/oder mindestens eine Öse und/oder mindestens ein Haken zur Anbringung einer Plane (29) vorgesehen ist.

12. Schiebeverdeckstruktur für einen Nutzfahrzeug- oder Anhängeraufbau, mit:
- zwei Spriegeln (1) nach einem der vorhergehenden Ansprüche,
- zwei Bügelelementen (33), die jeweils aus einem Draht ausgebildet sind und jeweils an einem Ende drehbar mit einem der beiden Spriegel (1) verbunden sind, und
- einem Auflageelement (34), das mit den beiden anderen Enden der beiden Bügelelemente (33) drehbar verbunden ist und eine Fläche (34a) zur Auflage einer Plane (29) aufweist.

13. Fahrzeuganhänger (5) mit einem Anhängeraufbau, der mindestens einen Spriegel (1) nach einem der Ansprüche 1 bis 11 oder eine Schiebeverdeckstruktur nach Anspruch 12 aufweist.

14. Verfahren zur Herstellung eines einteiligen Spriegels (1) für einen Nutzfahrzeug- oder Anhängeraufbau aus einem länglichen Blechteil, umfassend:
- Abwinkeln der in der Längserstreckungsrichtung des Blechteils außen liegenden Enden (3b) des Blechteils in einer Richtung im Wesentlichen senkrecht zur Längserstreckungsrichtung, und
- Umformen eines mittleren Abschnitts (2) zwischen den Enden (3b) des Blechteils zum Ausbilden einer in der Längserstreckungsrichtung verlaufenden ersten Sicke (6), so dass der mittlere Abschnitt (2) senkrecht zur Längserstreckungsrichtung des Blechteils ein im Wesentlichen Omega-förmiges erstes Querschnittsprofil (12) aufweist, wobei eine Breite (b12) des ersten Querschnittsprofils (12) von den Enden des mittleren Abschnitts (2) in der Längserstreckungsrichtung zu der Mitte des mittleren Abschnitts (2) um mindestens 10 mm zunimmt.

## Claims

1. A one-piece roof bow (1) for a commercial vehicle or trailer superstructure, which is formed by reshaping of a sheet metal component, comprising:
- an elongate middle portion (2) with a first bead (6) extending in the longitudinal direction of the middle portion (2), the elongate middle portion (2) having a first cross-sectional profile (12) perpendicular to the longitudinal direction, and
- two mounting portions (3) for mounting on the commercial vehicle or trailer superstructure, which mounting portions are formed integrally with the middle portion (2) on the two ends of the middle portion (2), each of the two mounting portions (3) comprising:
a) a first section (3a) facing the middle portion (2) and, in comparison with the first cross-sectional profile (12), having a flatter second cross-sectional profile (13) perpendicular to the longitudinal direction of the middle portion (2), and
b) a second section (3b) facing away from the middle portion (2) and bent substantially perpendicular to the longitudinal direction of the middle portion (2) in the opposite direction of the first bead (6),
**characterized in that**
the first cross-sectional profile (12) is substantially Omega-shaped, and
a width (b12) of the first cross-sectional profile (12) increases from the ends of the middle portion (2) in the longitudinal direction toward the center of the middle portion (2) by at least 10 mm.

2. The roof bow (1) according to claim 1, wherein the first section (3a) of each of the two mounting portions (3) comprises a second bead (7) running continuously with the first bead (6), and the second cross-sectional profile (13) is substantially Omega-shaped.

3. The roof bow (1) according to claim 2, wherein the second bead (7) has a depth (t2) which is at least 10 mm shallower than the first bead (6).

4. The roof bow (1) according to claim 2 or 3, wherein the second bead (7) runs from the first section (3a) of the mounting portions (3) around the outside of an edge (3c) between the first section (3a) and the second section (3b).

5. The roof bow (1) according to any one of the preceding claims, wherein the second cross-sectional profile (13) has a width (b13) of at least 50 mm.

6. The roof bow (1) according to any one of the preceding claims, wherein the first bead (6) has a depth (t1) of at least 25 mm and a width (b1) of at least 25 mm.

7. The roof bow (1) according to any one of the preceding claims, wherein, at the center of the middle portion (2), a width (b12) of the first cross-sectional profile (12) is at least 70 mm.

8. The roof bow (1) according to any one of the preceding claims, wherein at least one roller (21, 22) is mounted in the first section (3a) and in the second section (3b), respectively, of the mounting portions (3), for movably mounting the roof bow (1) in a rail of a longitudinal belt (15) of the commercial vehicle or trailer superstructure.

9. The roof bow (1) according to any one of the preceding claims, wherein, in the middle portion (2) and/or in the mounting portions (3), at least one hole (23, 24) with a diameter in a range of 5 mm to 30 mm is formed for fixing load securing elements.

10. The roof bow (1) according to any one of the preceding claims, wherein at least one reel (25) for guiding a rope (27) or a belt is mounted in the first bead (6) of the middle portion (2).

11. The roof bow (1) according to any one of the preceding claims, wherein at least one hole (28) and/or at least one eyelet and/or at least one hook for fixing a tarpaulin (29) is provided in the middle portion (2) and/or the attachment portions (3).

12. A sliding roof structure for a commercial vehicle or trailer superstructure, comprising:
- two roof bows (1) according to any one of the preceding claims,
- two bracket elements (33), each being formed of wire and pivotably connected with one of the two roof bows (1) at one end, and
- a support element (34) pivotably connected with the two other ends of the two bracket elements (33) and having a surface (34a) for supporting a tarpaulin (29).

13. A vehicle trailer (5) with a trailer superstructure comprising at least one roof bow (1) according to any one of claims 1 to 11 or a sliding roof structure according to claim 12.

14. A method for manufacturing a one-piece roof bow (1) for a commercial vehicle or trailer superstructure from an elongate sheet metal component, comprising:
- bending the longitudinally outer ends (3b) of the sheet metal component in a direction substantially perpendicular to the longitudinal direction, and
- reshaping a central portion (2) between the ends (3b) of the sheet metal component to form a first bead (6) extending in the longitudinal direction, such that, in the direction perpendicular to the longitudinal direction of the sheet metal component, the middle portion (2) has a substantially Omega-shaped first cross-sectional profile (12), wherein a width (b12) of the first cross-sectional profile (12) increases from the ends of the middle portion (2) in the longitudinal direction towards the center of the middle portion (2) by at least 10 mm.

## Revendications

1. Arceau (1) monobloc pour une carrosserie d'un véhicule utilitaire ou d'une remorque, qui est formé par formage à partir d'une pièce en tôle, comprenant:
- une section médiane (2) allongée avec un premier bourrelet (6) s'étendant dans la direction longitudinale de la section médiane (2), laquelle section centrale (2) présente, perpendiculaire à la direction longitudinale, un premier profil en coupe transversale (12), et
- deux sections de fixation (3) pour la fixation à la carrosserie du véhicule utilitaire ou de la remorque, qui sont formées d'une seule pièce avec la section médiane (2) aux deux extrémités de la section médiane (2), chacune des deux sections de fixation (3) comprenant :
a) une première région (3a) faisant face à la section médiane (2), qui présente, perpendiculaire à la direction longitudinale de la section médiane (2), un deuxième profil en coupe transversale (13) qui est plus plat par rapport au premier profil en coupe transversale (12), et
b) une deuxième région (3b) opposée à la section médiane (2), qui, sensiblement perpendiculaire à la direction longitudinale de la section médiane (2), est pliée dans la direction opposée au premier bourrelet (6),
**caractérisé en ce que**
le premier profil en coupe transversale (12) est sensiblement en forme d'oméga, et
une largeur (b12) du premier profil en coupe transversale (12) augmente d'au moins 10 mm depuis les extrémités de la section médiane (2) dans la direction longitudinale jusqu'au centre de la section médiane (2).

2. Arceau (1) selon la revendication 1, dans lequel la première région (3a) de chacune des deux sections de fixation (3) présente un deuxième bourrelet (7) qui s'étend en continu avec le premier bourrelet (6), et le deuxième profil en coupe transversale (13) est sensiblement en forme d'oméga.

3. Arceau (1) selon la revendication 2, dans lequel le deuxième bourrelet (7) a une profondeur (t2) qui est au moins 10 mm inférieure à celle du premier bourrelet (6).

4. Arceau (1) selon la revendication 2 ou 3, dans lequel le deuxième bourrelet (7) s'étend depuis la première région (3a) des sections de fixation (3) vers l'extérieur autour d'un bord (3c) entre la première région (3a) et la deuxième région (3b).

5. Arceau (1) selon l'une des revendications précédentes, dans lequel le deuxième profil en coupe transversale (13) a une largeur (b13) d'au moins 50 mm.

6. Arceau (1) selon l'une des revendications précédentes, dans lequel le premier bourrelet (6) a une profondeur (t1) d'au moins 25 mm et une largeur (b 1) d'au moins 25 mm.

7. Arceau (1) selon l'une des revendications précédentes, dans lequel une largeur (b12) du premier profil en coupe transversale (12) au milieu de la section médiane (2) est d'au moins 70 mm.

8. Arceau (1) selon l'une des revendications précédentes, dans lequel dans la première région (3a) et dans la deuxième région (3b) des sections de fixation (3) se trouve à chaque fois au moins un rouleau (21, 22) pour fixer l'arceau (1) de manière mobile dans un rail de roulement d'une courroie longitudinale (15) de la carrosserie du véhicule utilitaire ou de la remorque.

9. Arceau (1) selon l'une des revendications précédentes, dans lequel dans la section médiane (2) et/ou dans les sections de fixation (3) il est formé au moins un trou (23, 24) d'un diamètre compris dans un plage de 5 mm à 30 mm pour fixer des éléments d'arrimage du chargement.

10. Arceau (1) selon l'une des revendications précédentes, dans lequel au moins un rouleau (25) de guidage d'une corde (27) ou d'une sangle est prévu dans le premier bourrelet (6) de la section médiane (2).

11. Arceau (1) selon l'une des revendications précédentes, dans lequel dans la section médiane (2) et/ou dans les sections de fixation (3) il est prévu au moins un trou (28) et/ou au moins un oeillet et/ou au moins un crochet pour fixer une bâche (29).

12. Structure de toit ouvrant pour une carrosserie d'un véhicule utilitaire ou d'un remorque, avec:
- deux arceaux (1) selon l'une des revendications précédentes,
- deux éléments de fixation (33), dont chacun est constitué d'un fil et qui sont chacun reliés de manière rotative par une extrémité à l'une des deux arceaux (1), et
- un élément de support (34) qui est relié de manière rotative aux deux autres extrémités des deux éléments de fixation (33) et qui présente une surface (34a) pour supporter une bâche (29).

13. Remorque de véhicule (5) avec une carrosserie de remorque qui présente au moins un arceau (1) selon l'une des revendications 1 à 11 ou une structure de toit ouvrant selon la revendication 12.

14. Procédé de fabrication d'un arceau (1) monobloc pour une carrosserie d'un véhicule utilitaire ou d'un remorque à partir d'une pièce de tôle allongée, comprenant :
- plier les extrémités (3b) de la pièce en tôle situées vers l'extérieur dans la direction longitudinale de la pièce en tôle, selon une direction sensiblement perpendiculaire à la direction longitudinale, et
- formation d'une section médiane (2) entre les extrémités (3b) de la pièce en tôle pour former un premier bourrelet (6) s'étendant dans la direction longitudinale, de sorte que la section médiane (2), perpendiculaire à la direction longitudinale de la pièce en tôle, présente un premier profil en coupe transversale (12) sensiblement en forme d'oméga, dans lequel une largeur (b12) du premier profil en coupe transversale (12) augmente d'au moins 10 mm depuis les extrémités de la section médiane (2) dans la direction longitudinale jusqu'au centre de la section médiane (2).
